(19) Europäisches Patentamt
European Patent Office
Office européen des brevets

(11) **EP 4 583 413 A1**

(12) **EUROPEAN PATENT APPLICATION**
published in accordance with Art. 153(4) EPC

(43) Date of publication:
**09.07.2025 Bulletin 2025/28**

(21) Application number: **22963492.8**

(22) Date of filing: **27.10.2022**

(51) International Patent Classification (IPC):
*H04B 3/04* (2006.01)

(52) Cooperative Patent Classification (CPC):
**H04B 3/04**

(86) International application number:
**PCT/JP2022/040183**

(87) International publication number:
**WO 2024/089844 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **MITSUBISHI ELECTRIC CORPORATION**
**Chiyoda-ku**
**Tokyo 100-8310 (JP)**

(72) Inventors:
• **SAKAI, Manabu**
  **Tokyo 100-8310 (JP)**
• **TAIRA, Akinori**
  **Tokyo 100-8310 (JP)**

(74) Representative: **Pfenning, Meinig & Partner mbB**
**Patent- und Rechtsanwälte**
**Theresienhöhe 11a**
**80339 München (DE)**

(54) **COMMUNICATION DEVICE, LEANING DEVICE, COMMUNICATION SYSTEM, CONTROL CIRCUIT, STORAGE MEDIUM, AND STEP SIZE UPDATING METHOD**

(57) A communication apparatus includes: a linear equalization unit (401) that performs linear equalization on a reception signal; a tap coefficient adjustment unit (402) that adjusts, based on a step size (405), a tap coefficient (403); and a step size learning unit (404) that learns the step size (405). The step size learning unit (404) includes: a plurality of neural network layers that each perform computation of an updated tap coefficient based on an initial tap coefficient or an updated tap coefficient output from the neural network layer at a previous stage, the reception signal, and a reference signal (307), and each hold an internal parameter; a learning processing unit that performs learning using an error function in the learning as a mean square error between a tap coefficient based on a least square solution calculated from the reception signal and the reference signal (307) and an updated tap coefficient output from the neural network layer at a last stage of the plurality of neural network layers, and updates the internal parameters; and an internal parameter collection unit that updates the step size (405) based on the internal parameters.

FIG.4

## Description

Field

The present disclosure relates to a communication apparatus for performing equalization processing, a learning apparatus, a communication system, a control circuit, a storage medium, and a step size update method.

Background

Conventionally, a wireless communication system involves equalization processing for reducing, in a receiver, an influence of waveform distortion caused by delay dispersion in a propagation path because the waveform distortion significantly degrades transmission performance. A typical example of the equalization processing is linear equalization in a time domain. The linear equalization can be implemented by a transversal filter and multiplies a sampled reception signal by a filter tap coefficient to obtain an equalization output. In the linear equalization, equalization processing for sequentially updating the filter tap coefficient is referred to as adaptive equalization. In the adaptive equalization, there is a parameter called a step size that determines how much the filter tap coefficient is updated for each repetition. For example, Non Patent Literature 1 discloses an adaptive equalization technique of updating a filter tap coefficient using a step size of a fixed value.

Citation List

Non Patent Literature

Non Patent Literature 1: S.U.H. QURESHI "Adaptive Equalization" in Proceedings of the IEEE, vol. 73, no. 9, pp. 1349-1387, Sept. 1985

Summary

Technical Problem

However, according to the above-described conventional technique, a method of updating a filter tap coefficient using a step size of a fixed value allows empirically determining the step size but encounters difficulty in empirically obtaining an optimum value, which is problematic. Although execution of an exhaustive search is also possible in order to determine an optimal step size, the number of searches becomes enormous depending on the number of conditions to be considered, granularity during the search, and the like.

The present disclosure has been made in view of the circumstances, and an object of the present disclosure is to provide a communication apparatus capable of adjusting a step size for adaptive equalization and reducing an error in the adaptive equalization.

Solution to Problem

In order to solve the above-described problems and achieve the object, a communication apparatus according to the present disclosure includes: a linear equalization unit to perform linear equalization on a reception signal; a tap coefficient adjustment unit to adjust, based on a step size, a tap coefficient to be used in the linear equalization; and a step size learning unit to learn the step size. The step size learning unit includes: a plurality of neural network layers to each perform computation of an updated tap coefficient based on a specified initial tap coefficient or an updated tap coefficient output from the neural network layer at a previous stage, the reception signal, and a reference signal that is a specified signal sequence, and to each hold an internal parameter to be used in the computation; a learning processing unit to perform learning using an error function in the learning as a mean square error between a tap coefficient based on a least square solution calculated from the reception signal and the reference signal and an updated tap coefficient output from the neural network layer at a last stage of the plurality of neural network layers, and to update the internal parameters; and an internal parameter collection unit to update the step size based on the internal parameters collected from the plurality of neural network layers.

Advantageous Effects of Invention

The communication apparatus according to the present disclosure has an effect of being able to adjust the step size for the adaptive equalization and to reduce the error in the adaptive equalization.

Brief Description of Drawings

FIG. 1 is a diagram illustrating an exemplary configuration of a communication apparatus according to a first embodiment.

FIG. 2 is a diagram illustrating an exemplary configuration of a transmission and reception processing unit included in the communication apparatus according to the first embodiment.

FIG. 3 is a diagram illustrating an exemplary configuration of a reception processing unit included in the transmission and reception processing unit according to the first embodiment.

FIG. 4 is a diagram illustrating an exemplary configuration of an equalization processing unit included in the reception processing unit according to the first embodiment.

FIG. 5 is a diagram illustrating an exemplary configuration of a linear equalization unit included in the equalization processing unit according to the first embodiment.

FIG. 6 is a diagram illustrating an exemplary configuration of a tap coefficient adjustment unit included in the equalization processing unit according to the first embodiment.

FIG. 7 is a diagram illustrating an exemplary configuration of a step size learning unit included in the equalization processing unit according to the first embodiment.

FIG. 8 is a diagram illustrating an exemplary configuration of a Neural Network (NN) layer included in the step size learning unit according to the first embodiment.

FIG. 9 is a diagram illustrating an exemplary configuration of a step size learning unit included in an equalization processing unit according to a third embodiment.

FIG. 10 is a diagram illustrating an exemplary configuration of a reception processing unit included in a transmission and reception processing unit according to a fifth embodiment.

FIG. 11 is a diagram illustrating an exemplary configuration of an equalization processing unit included in the reception processing unit according to the fifth embodiment.

FIG. 12 is a diagram illustrating an exemplary configuration of a tap coefficient adjustment unit included in an equalization processing unit according to a sixth embodiment.

FIG. 13 is a diagram illustrating an exemplary configuration of a NN layer included in a step size learning unit according to the sixth embodiment.

FIG. 14 is a diagram illustrating an exemplary configuration of a linear equalization unit included in an equalization processing unit according to a seventh embodiment.

FIG. 15 is a diagram illustrating an exemplary configuration of a communication apparatus according to an eighth embodiment.

FIG. 16 is a diagram illustrating an exemplary configuration of a transmission and reception processing unit included in the communication apparatus according to the eighth embodiment.

FIG. 17 is a diagram illustrating an exemplary configuration of a reception processing unit included in the transmission and reception processing unit according to the eighth embodiment.

FIG. 18 is a diagram illustrating an exemplary configuration of the equalization processing unit included in the reception processing unit according to the eighth embodiment.

FIG. 19 is a diagram illustrating an exemplary configuration of a communication apparatus according to a ninth embodiment.

FIG. 20 is a diagram illustrating an exemplary configuration of an equalization processing unit included in a reception processing unit according to a tenth embodiment.

FIG. 21 is a diagram illustrating an exemplary configuration of a NN layer included in a step size learning unit of a learning apparatus according to the tenth embodiment.

FIG. 22 is a diagram illustrating an exemplary configuration of a communication system in a case where federated learning is performed by M communication apparatuses according to an eleventh embodiment.

FIG. 23 is a flowchart illustrating an operation of a communication apparatus according to a twelfth embodiment.

FIG. 24 is a diagram illustrating an exemplary configuration of processing circuitry in a case where a processor and a memory implement processing circuitry that implements the communication apparatus according to the twelfth embodiment.

FIG. 25 is diagram illustrating an example of processing circuitry in a case where dedicated hardware constitutes processing circuitry that implements the communication apparatus according to the twelfth embodiment.

Description of Embodiments

Hereinafter, with reference to the drawings, a description will be given in detail of a communication apparatus, a learning apparatus, a communication system, a control circuit, a storage medium, and a step size update method according to embodiments of the present disclosure.

First Embodiment.

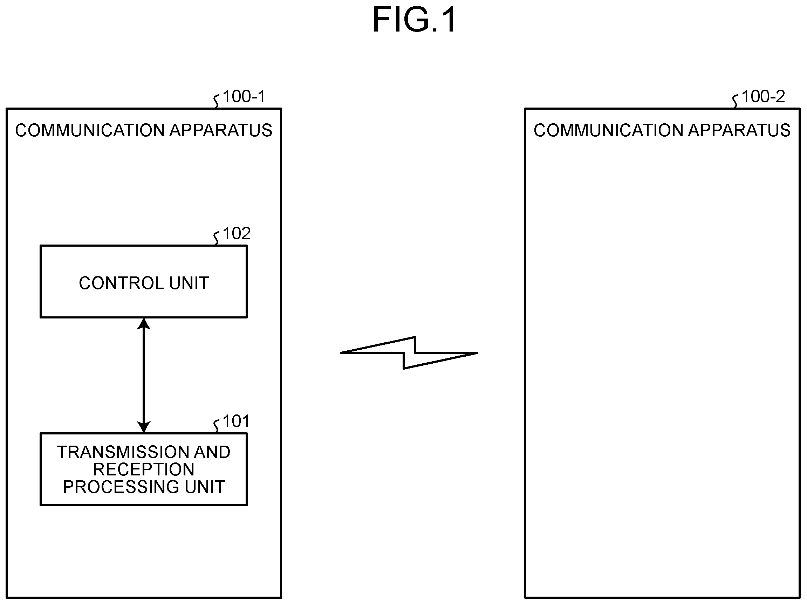

FIG. 1 is a diagram illustrating an exemplary configuration of a communication apparatus 100-1 according to a first embodiment. The communication apparatus 100-1 includes a transmission and reception processing unit 101 and a control unit 102 that controls the transmission and reception processing unit 101. FIG. 1 also illustrates a communication apparatus 100-2 that is a communication partner of the communication apparatus 100-1. Although not illustrated in FIG. 1, the communication apparatus 100-2 may have a configuration the same as that of the communication apparatus 100-1 or may have a configuration different from that of the communication apparatus 100-1.

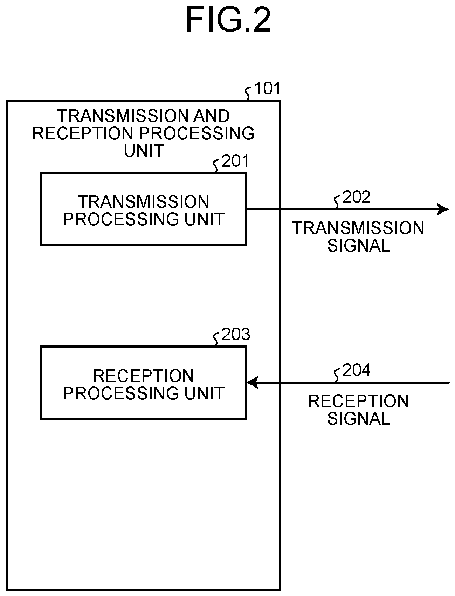

FIG. 2 is a diagram illustrating an exemplary configuration of the transmission and reception processing unit 101 included in the communication apparatus 100-1 according to the first embodiment. The transmission and reception processing unit 101 includes a transmission processing unit 201 and a reception processing unit 203. The transmission processing unit 201 transmits a transmission signal 202 to the communication apparatus 100-2, and the reception processing unit 203 receives a reception signal 204 from the communication apparatus 100-2.

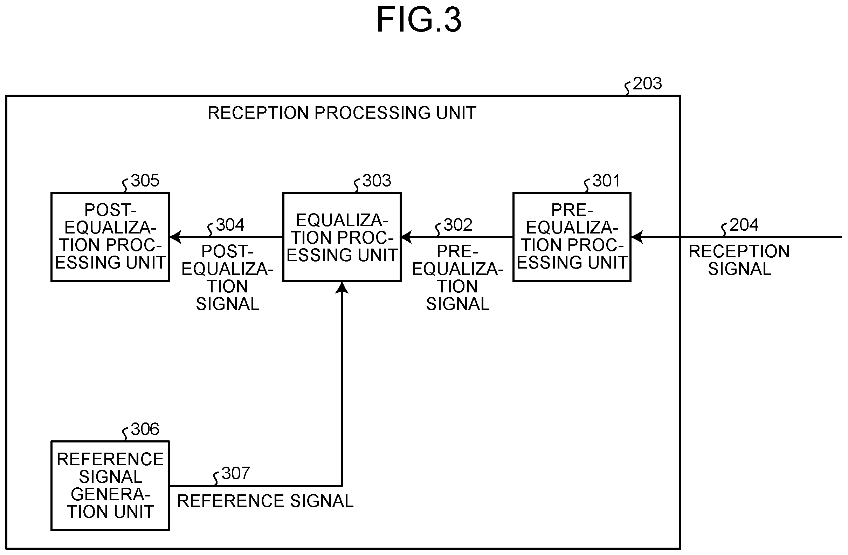

FIG. 3 is a diagram illustrating an exemplary configuration of the reception processing unit 203 included in the transmission and reception processing unit 101 according to the first embodiment. The reception processing unit 203 includes a pre-equalization processing unit 301, an equalization processing unit 303, a post-equalization processing unit 305, and a reference signal generation unit 306.

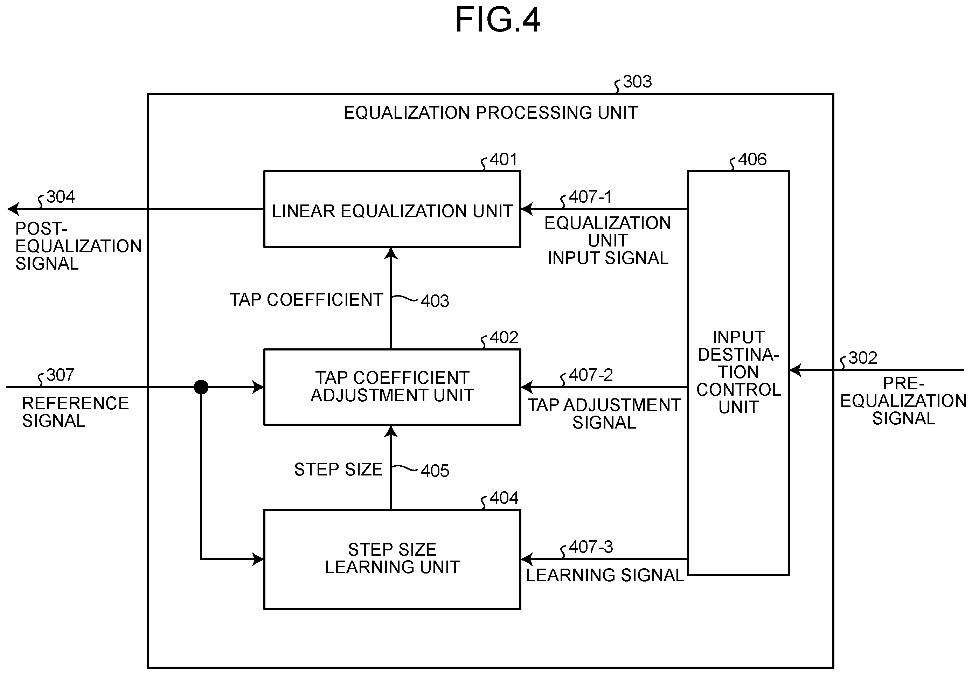

FIG. 4 is a diagram illustrating an exemplary configuration of the equalization processing unit 303 included in the reception processing unit 203 according to the first embodiment. The equalization processing unit 303 includes a linear equalization unit 401, a tap coefficient adjustment unit 402, a step size learning unit 404, and an input destination control unit 406.

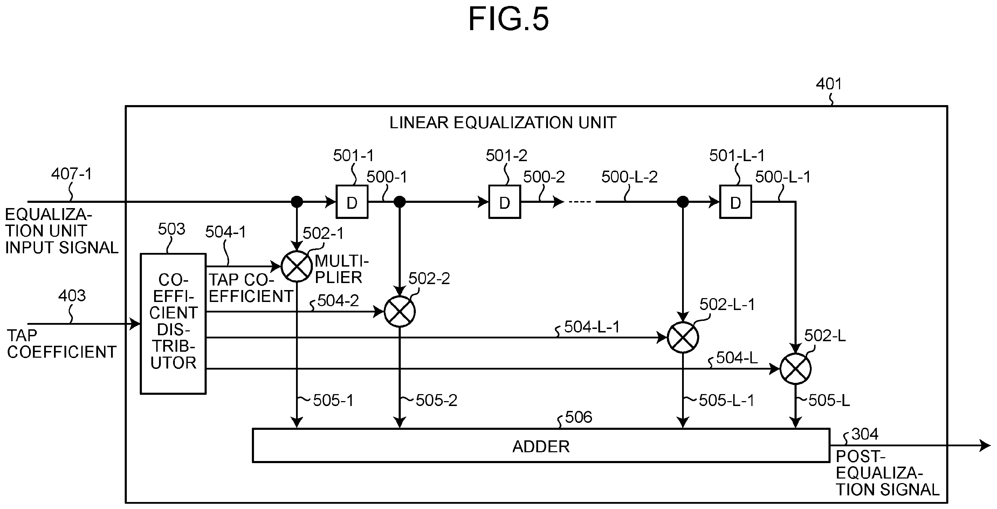

FIG. 5 is a diagram illustrating an exemplary configuration of the linear equalization unit 401 included in the equalization processing unit 303 according to the first embodiment. The linear equalization unit 401 has a transversal filter structure. The linear equalization unit 401 includes L-1 delay elements 501-1 to 501-L-1, L multipliers 502-1 to 502-L, a coefficient distributor 503, and an adder 506. L for determining both the number of delay elements 501-1 to 501-L-1 and the number of multipliers 502-1 to 502-L may be freely set in accordance with desired communication performance and the like in the communication apparatus 100-1.

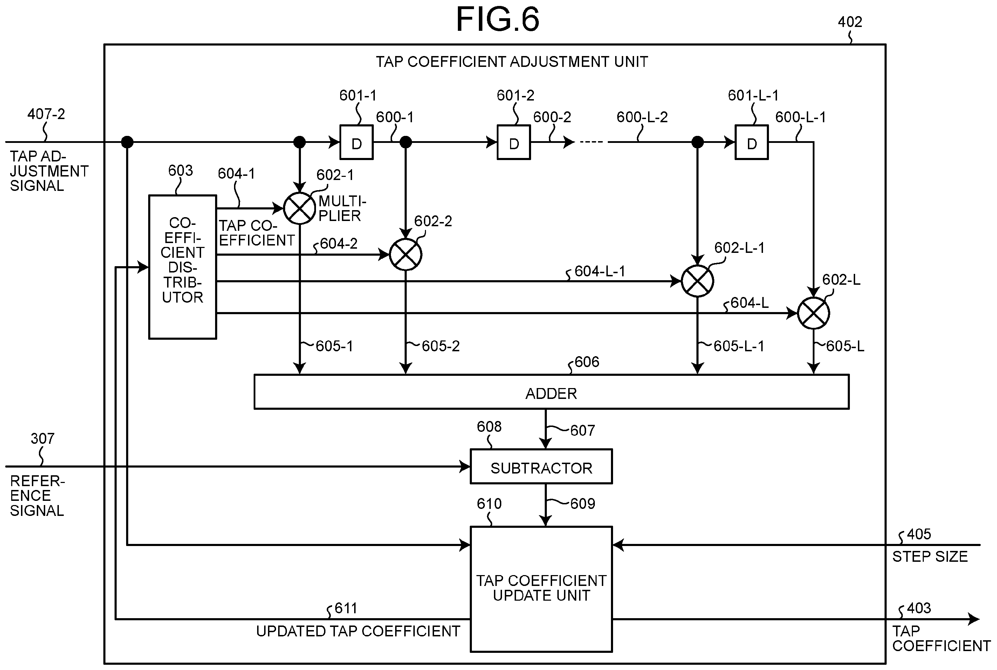

FIG. 6 is a diagram illustrating an exemplary configuration of the tap coefficient adjustment unit 402 included in the equalization processing unit 303 according to the first embodiment. The tap coefficient adjustment unit 402 adjusts the tap coefficient 403 for adaptive equalization performed by the equalization processing unit 303. The tap coefficient adjustment unit 402 includes L-1 delay elements 601-1 to 601-L-1, L multipliers 602-1 to 602-L, a coefficient distributor 603, an adder 606, a subtractor 608, and a tap coefficient update unit 610.

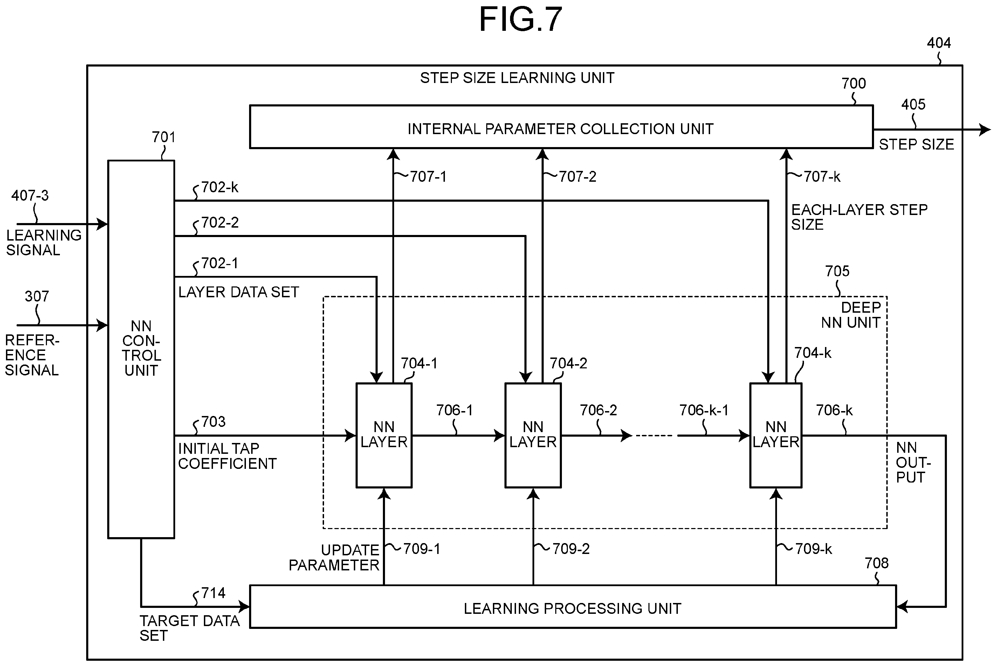

FIG. 7 is a diagram illustrating an exemplary configuration of the step size learning unit 404 included in the equalization processing unit 303 according to the first embodiment. The step size learning unit 404 includes a plurality of NN layers, that is, a plurality of neural network layers, and calculates a step size 405 for the adaptive equalization performed by the equalization processing unit 303. The step size learning unit 404 includes an internal parameter collection unit 700, a NN control unit 701, a deep NN unit 705 including K NN layers 704-1 to 704-K, and a learning processing unit 708. The number K of the NN layers 704-1 to 704-K can be freely set in accordance with desired communication performance and the like in the communication apparatus 100-1.

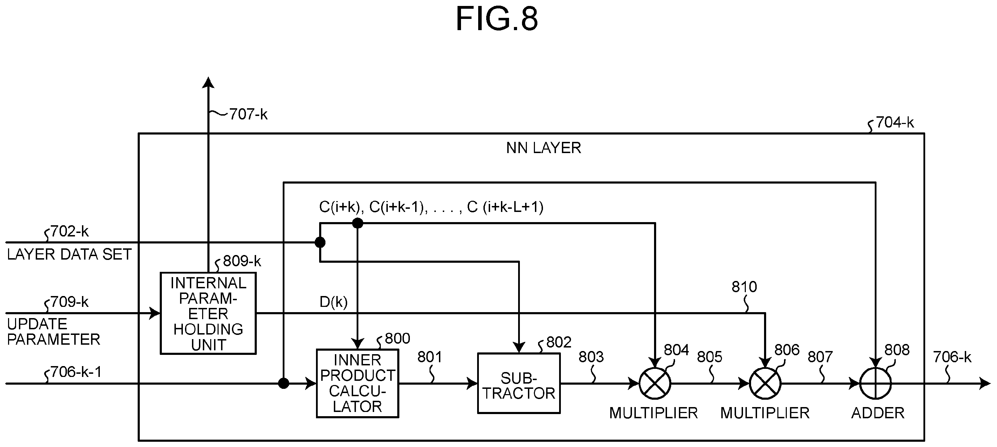

FIG. 8 is a diagram illustrating an exemplary configuration of the NN layer 704-k included in the step size learning unit 404 according to the first embodiment. Here, k is an integer from 1 to K. The NN layer 704-k is used in learning the step size 405 for the adaptive equalization performed by the equalization processing unit 303. The NN layer 704-k includes an inner product calculator 800, a subtractor 802, multipliers 804 and 806, an adder 808, and an internal parameter holding unit 809-k.

Next, an operation of the communication apparatus 100-1 will be described. As illustrated in FIG. 1, in the communication apparatus 100-1, the transmission and reception processing unit 101 performs processing of transmission and reception in communication with the communication apparatus 100-2 under the control of the control unit 102. As illustrated in FIG. 2, in the transmission and reception processing unit 101, the transmission processing unit 201 transmits the transmission signal 202 to the communication apparatus 100-2, and the reception processing unit 203 receives the reception signal 204 from the communication apparatus 100-2.

As illustrated in FIG. 3, in the reception processing unit 203, the pre-equalization processing unit 301 performs, on the reception signal 204, signal processing necessary before the equalization processing in the equalization processing unit 303, that is, before the equalization, and outputs a pre-equalization signal 302 to the equalization processing unit 303. The signal processing necessary before the equalization may be any processing as long as it is a method of outputting the pre-equalization signal 302 suitable for processing in the equalization processing unit 303.

Examples of the signal processing include correction of circuit mismatch in a transceiver, correction of a Doppler shift, frequency conversion, analog-to-digital conversion, sampling rate conversion, level adjustment, and the like. Here, the transceiver means the communication apparatus 100-1. Examples of the circuit mismatch in the transceiver include a carrier frequency offset, a frequency deviation, phase noise, nonlinearity of an amplifier, and the like. An example of the frequency conversion includes downconversion. Examples of the sampling rate conversion include upsampling, downsampling, and the like. Examples of the level adjustment include amplification, attenuation, and the like. Note that, in a case where the reception signal 204 can be used for the equalization processing in the equalization processing unit 303, that is, in a case where the equalization processing unit 303 can perform the equalization processing on the reception signal 204, the reception processing unit 203 may not necessarily include the pre-equalization processing unit 301. In this case, the pre-equalization signal 302 input to the equalization processing unit 303 is the reception signal 204. The same applies to the reception processing unit described below.

The reference signal generation unit 306 outputs, as a reference signal 307, a previously specified signal sequence, for example, a pilot signal, to the equalization processing unit 303. Examples of the previously specified signal sequence include a Pseudorandom Noise (PN) sequence, a Gold sequence, an M sequence, a Zadoff-Chu (ZC) sequence, and the like. The previously specified signal sequence may be any sequence as long as it is suitable for processing in the equalization processing unit 303.

The equalization processing unit 303 acquires the pre-equalization signal 302 from the pre-equalization processing unit 301, acquires the reference signal 307 from the reference signal generation unit 306, performs specified processing using the pre-equalization signal 302 and the reference signal 307, and then outputs a post-equalization signal 304 to the post-equalization processing unit 305. The specified processing in the equalization processing unit 303 will be described later.

The post-equalization processing unit 305 acquires the post-equalization signal 304 from the equalization processing unit 303, and performs, on the post-equalization signal 304, processing necessary after the equalization processing in the equalization processing unit 303, that is, after the equalization. Examples of the processing necessary after the equalization include sampling rate conversion, level adjustment, symbol determination, error correction, and the like. Examples of the sampling rate conversion include upsampling, downsampling, and the like. Examples of the level adjustment include amplification, attenuation, and the like.

As illustrated in FIG. 4, in the equalization processing unit 303, the input destination control unit 406 has three internal states of a linear equalization phase, a tap coefficient adjustment phase, and a learning phase, distributes the pre-equalization signal 302 acquired from the pre-equalization processing unit 301 into an equalization unit input signal 407-1, a tap adjustment signal 407-2, and a learning signal 407-3 in accordance with the respective phases, and outputs the signals. For example, the input destination control unit 406 outputs, as the equalization unit input signal 407-1, the pre-equalization signal 302 to the linear equalization unit 401 in a time range in which a data signal is received. The input destination control unit 406 also outputs, as the tap adjustment signal 407-2, the pre-equalization signal 302 to the tap coefficient adjustment unit 402 in a time range in which a known sequence such as a preamble is received. The input destination control unit 406 also outputs, as the learning signal 407-3, the pre-equalization signal 302 to the step size learning unit 404 in a time range in which learning data is received. Note that, as described above, in the case where the pre-equalization signal 302 is the reception signal 204, the equalization unit input signal 407-1, the tap adjustment signal 407-2, and the learning signal 407-3 are also each the reception signal 204. The same applies to the equalization processing unit described below.

Note that, the three internal states are not contradictory to each other and may be established simultaneously. For example, in the time range in which the known sequence is received, the input destination control unit 406 outputs, as the tap adjustment signal 407-2, the pre-equalization signal 302 to the tap coefficient adjustment unit 402 and also outputs, as the learning signal 407-3, the pre-equalization signal 302 to the step size learning unit 404, that is, simultaneously outputs the pre-equalization signals 302 to two places. In this manner, the equalization processing unit 303 may learn the step size 405 while adjusting the tap coefficient 403. In the case where the reception processing unit 203 does not include the pre-equalization processing unit 301, the equalization unit input signal 407-1, the tap adjustment signal 407-2, and the learning signal 407-3 are each the same as the reception signal 204.

The linear equalization unit 401 performs linear equalization on the equalization unit input signal 407-1, that is, the pre-equalization signal 302, using the tap coefficient 403 acquired from the tap coefficient adjustment unit 402. As illustrated in FIG. 5, in the linear equalization unit 401, the delay element 501-1 delays the equalization unit input signal 407-1 acquired from the input destination control unit 406 by one specified time and outputs the equalization unit input signal 407-1 as a signal 500-1. Here, the one specified time is, for example, a value that can be set based on a clock cycle, a sampling cycle, and the like of the circuit of the equalization processing unit 303. In the same way, the delay element 501-2 delays the signal 500-1 by one specified time and outputs the signal 500-1 as a signal 500-2, and the delay element 501-L-1 delays a signal 500-L-2 by one specified time and outputs the signal 500-L-2 as a signal 500-L-1. The L-1 delay elements 501-1 to 501-L-1 perform the same operation.

The coefficient distributor 503 distributes the tap coefficient 403 acquired from the tap coefficient adjustment unit 402 so as to be assigned to the multipliers 502-1 to 502-L, and outputs the tap coefficient 403 as the tap coefficients 504-1 to 504-L. The multipliers 502-1 to 502-L respectively perform complex conjugate multiplications of the equalization unit input signal 407-1 and the signals 500-1 to 500-L-1 and the tap coefficients 504-1 to 504-L, and output the resultant signals as signals 505-1 to 505-L. The complex conjugate multiplication will be specifically described using the multiplier 502-1 as an example. When the equalization unit input signal 407-1 is represented by X, the tap coefficient 504-1 is represented by W, and the signal 505-1 is represented by Y, the complex conjugate multiplication follows Formula (1). Here, (W*) is the complex conjugate of W. The adder 506 calculates the sum of the signals 505-1 to 505-L and outputs the sum as the post-equalization signal 304.

$$Y=(W*) \times X \quad \ldots (1)$$

The tap coefficient adjustment unit 402 adjusts, based on the step size 405 acquired from the step size learning unit 404, the tap coefficient 403 to be used in the linear equalization by the linear equalization unit 401. As illustrated in FIG. 6, in the tap coefficient adjustment unit 402, the delay element 601-1 delays the tap adjustment signal 407-2 acquired from the input destination control unit 406 by one specified time and outputs the tap adjustment signal 407-2 as a signal 600-1. Here, the one specified time is, for example, a value that can be set based on a clock cycle, a sampling cycle, and the like of the circuit of the equalization processing unit 303. In the same way, the delay element 601-2 delays the signal 600-1 by one specified time and outputs the signal 600-1 as a signal 600-2, and the delay element 601-L-1 delays a signal 600-L-2 by one specified time and outputs the signal 600-L-2 as a signal 600-L-1. The L-1 delay elements 601-1 to 601-L-1 perform the same operation.

The coefficient distributor 603 distributes an updated tap coefficient 611 acquired from the tap coefficient update unit 610 so as to be assigned to the multipliers 602-1 to 602-L, and outputs the updated tap coefficient 611 as the tap coefficients 604-1 to 604-L. The multipliers 602-1 to 602-L respectively perform complex conjugate multiplications of the tap adjustment signal 407-2 and the signals 600-1 to 600-L-1 and the tap coefficients 604-1 to 604-L, and output the resultant signals as signals 605-1 to 605-L. Processing of the complex conjugate multiplication in the tap coefficient adjustment unit 402 is the same as the processing of the complex conjugate multiplication in the linear equalization unit 401 described above. The adder 606 calculates the sum of the signals 605-1 to 605-L, and outputs the sum as a signal 607. The subtractor 608 subtracts the signal 607 from the reference signal 307, and outputs the resultant signal as a signal 609.

The tap coefficient update unit 610 holds a "previously specified initial tap coefficient", and, at the start of processing, holds therein the "previously specified initial tap coefficient" as a current tap coefficient and outputs the previously specified initial tap coefficient as the updated tap coefficient 611. Upon acquiring the tap adjustment signal 407-2 from the input destination control unit 406, the tap coefficient update unit 610 starts processing of holding the tap adjustment signal 407-2 and holds therein the tap adjustment signal 407-2 for L specified time. The processing of holding the tap adjustment signal 407-2 in the tap coefficient update unit 610 is processing of First-Input First-Output (FIFO), and the leading tap adjustment signal 407-2 is erased at a timing after the tap adjustment signal 407-2 is acquired for the L specified time. The tap coefficient update unit 610 calculates the next tap coefficient, using the tap adjustment signal 407-2 held therein for the L specified time, the signal 609 acquired from the subtractor 608, the step size 405 acquired from the step size learning unit 404, and the current tap coefficient held therein. When an l-th signal of the tap adjustment signal 407-2 held in the tap coefficient update unit 610 for the L specified time is represented by Y(l), the signal 609 is represented by E, the step size 405 is represented by $\mu$, an l-th component of the current tap coefficient is represented by W(l), and the next tap coefficient is represented by V(l), the relationship therebetween follows Formula (2). Here, (E*) represents the complex conjugate of E. The tap coefficient update unit 610 outputs the next tap coefficient as the updated tap coefficient 611 and replaces the current tap coefficient with the next tap coefficient. The tap coefficient adjustment unit 402 repeats the series of processing K times. Here, K is a value previously specified based on the length and the like of the reference signal 307 and can be freely set.

$$V(l)=W(l)+(\mu \times Y(l) \times (E*)) \quad \ldots (2)$$

The step size learning unit 404 learns the step size 405 and outputs the step size 405 to the tap coefficient adjustment unit 402. As illustrated in FIG. 7, in the step size learning unit 404, when an index of the learning signal 407-3 at a learning start time point is represented by i, an i-th learning signal 407-3 is represented by C(i), and a k-th reference signal 307 is represented by D(k), the NN control unit 701 outputs, as a k-th layer data set 702-k, a combination of learning signals C(i+k), C(i+k-1), C(i+k-2), ..., and C(i+k-L+1) and a reference signal D(k) to the NN layer 704-k, and outputs, as an initial tap coefficient 703, a "previously specified initial tap coefficient" to the NN layer 704-1. Here, the "previously specified initial tap coefficient" is assumed to be identical to the "previously specified initial tap coefficient" held in the tap coefficient adjustment unit 402. The NN control unit 701 respectively outputs layer data sets 702-1 to 702-K to the NN layers 704-1 to 704-K.

The learning processing unit 708 respectively outputs, as update parameters 709-1 to 709-K, an initial value of a previously specified internal parameter 810 to the NN layers 704-1 to 704-K.

The deep NN unit 705 is a multilayer neural network including NN layers 704-1 to 704-K. In a k-th NN layer 704-k of the deep NN unit 705, the inner product calculator 800 illustrated in FIG. 8 calculates an inner product of a signal 706-k-1 from the NN layer 704-k-1 at the one-previous stage and the learning signals C(i+k), C(i+k-1), ..., and C(i+k-L+1) out of the layer data set 702-k to obtain a signal 801. When a j-th signal of the signal 706-k-1 is represented by P(j) and the signal 801 is represented by S, the processing of the inner product calculator 800 follows Formula (3). Here, (P(j)*) represents a complex conjugate of P(j).

$$S=\Sigma\_(j=0)^{\wedge}(j=L-1)(P(j)*)\times C(i+k-j) \ldots(3)$$

The subtractor 802 subtracts the signal 801 from the reference signal D(k) out of the layer data set 702-k, and outputs the resultant signal as a signal 803.

The multiplier 804 performs complex conjugate multiplications of the learning signals C(i+k), C(i+k-1), ..., and C(i+k-L+1) out of the layer data set 702-k and the signal 803, and outputs the resultant signals as a signal 805. When the signal 803 is represented by A and a j-th component of the signal 805 is represented by B(j), the processing of the multiplier 804 follows Formula (4).

$$B(j)=(A*)\times C(i+k-j) \ldots(4)$$

The multiplier 806 outputs, as a signal 807, a multiplication result of the internal parameter 810 acquired from the internal parameter holding unit 809-k and the signal 805. When the internal parameter 810 is represented by $\mu$, the j-th component of the signal 805 is represented by B(j), and a j-th component of the signal 807 is represented by U(j), the processing of the multiplier 806 follows Formula (5).

$$U(j)=\mu\times B(j) \ldots(5)$$

The adder 808 outputs, as a signal 706-k, an addition result of the signal 706-k-1 and the signal 807. When the signal 706-k-1 is represented by P(j), the j-th component of the signal 807 is represented by U(j), and the signal 706-k is represented by Q(j), the processing of the adder 808 follows Formula (6).

$$Q(j)=P(j)+U(j) \ldots(6)$$

In the NN layers 704-1 to 704-K, the NN layers 704-1 to 704-K-1 respectively output the signals 706-1 to 706-K-1 through the above processing, and the NN layer 704-K at the last stage outputs a NN output 706-K through the above processing.

The internal parameter holding unit 809-k holds the internal parameter 810 to be learned, and, upon acquiring the update parameter 709-k from the learning processing unit 708, updates the held internal parameter 810 to the update parameter 709-k.

As illustrated in FIG. 7, when the i-th learning signal 407-3 is represented by C(i) and the k-th reference signal 307 is represented by D(k), the NN control unit 701 outputs, as a target data set 714, a combination of learning signals C(i+K), C(i+K-1), C(i+K-2), ..., and C(i-L+1) and reference signals D(0), D(1), ..., and D(K-1).

The learning processing unit 708 calculates a data vector c according to Formula (7) using the target data set 714. Here, "^T" represents transposition.

$$c(k)=[C(i+k),C(i+k-1),C(i+k-L+1)]^{\wedge}T \ldots(7)$$

The learning processing unit 708 calculates, according to Formulas (8) and (9), a correlation matrix R and a correlation vector r, using the data vector c and the reference signals D(0), D(1), ..., and D(K-1).

$$R=\Sigma\_(k=0)^{\wedge}(k=K-1)c(k)c^{\wedge}H(k) \ldots(8)$$

$$r=\Sigma\_(k=0)^{\wedge}(k=K-1)(D(k)*)\times c(k) \ldots(9)$$

The learning processing unit 708 calculates, according to Formula (10), a target tap coefficient vector u from the correlation matrix R and the correlation vector r. Here, "^(-1)" represents inverse matrix computation.

$$u=R^{(-1)}r \quad ...(10)$$

The target tap coefficient vector u is a Least Square (LS) solution that can be calculated using the target data set 714. The learning processing unit 708 uses, as an error function, a Mean Square Error (MSE) between the target tap coefficient vector u and the NN output 706-K and learns the internal parameters 810 held by the internal parameter holding units 809-1 to 809-K respectively included in the NN layers 704-1 to 704-K of the deep NN unit 705. In updating the internal parameters 810 of the NN layers 704-1 to 704-K in learning, the learning processing unit 708 outputs the update parameters 709-1 to 709-K and updates the internal parameters 810 held by the internal parameter holding units 809-1 to 809-K. The learning processing unit 708 learns the internal parameters 810 by using, for example, stochastic gradient descent method and backpropagation algorithm.

After a predetermined learning end condition is satisfied, the internal parameter collection unit 700 collects, as each-layer step sizes 707-1 to 707-K, the internal parameters 810 included in the NN layers 704-1 to 704-K, and outputs the internal parameters 810 as the step size 405.

As described above, in the step size learning unit 404, each of the NN layers 704-1 to 704-K performs computation of an updated tap coefficient based on the specified initial tap coefficient 703 or the signal 706-k-1 that is the updated tap coefficient output from the NN layer 704-k-1 at the previous stage, the pre-equalization signal 302 that is the learning signal 407-3 included in the layer data set 702-k, and the reference signal 307 that is the specified signal sequence included in the layer data set 702-k, and holds the internal parameter 810 to be used in the computation. The learning processing unit 708 performs learning using an error function in learning as a mean square error between a tap coefficient based on a least square solution calculated from the pre-equalization signal 302 that is the learning signal 407-3 and the reference signal 307 and the NN output 706-K that is the updated tap coefficient output from the NN layer 704-K that is the last stage of the NN layers 704-1 to 704-K, and updates the internal parameters 810. The internal parameter collection unit 700 updates the step size 405 based on the each-layer step sizes 707-1 to 707-K that are the internal parameters 810 collected from the NN layers 704-1 to 704-K.

As described above, in the transmission and reception processing unit 101 of the communication apparatus 100-1, since the step size learning unit 404 learns the step size 405 for updating the tap coefficient 403, the equalization processing unit 303 of the reception processing unit 203 can adjust the tap coefficient 403 to the optimum tap coefficient 403 and can minimize the error in the equalization processing, even in the case where the number of update times of the tap coefficient 403 is restricted to K times. Furthermore, since the step size learning unit 404 uses the error function in learning as the MSE of the target tap coefficient vector u of the NN output 706-K and the NN output 706-K, the equalization processing unit 303 can prevent a deterioration in convergence characteristics in learning. The target tap coefficient vector u is a LS estimation solution. The equalization processing unit 303 can adjust the step size 405 for the adaptive equalization and reduce an error in the adaptive equalization.

Second Embodiment.

In the first embodiment described above, the learning of the deep NN unit 705 in the step size learning unit 404 is performed by using stochastic gradient descent method and backpropagation algorithm. However, any means for implementing the learning may be used as long as it is a method by which the multilayer neural network can be learned. For example, the step size learning unit 404 may use, for learning of the deep NN unit 705, AdaGrad, momentum, or the like instead of the stochastic gradient descent method or may perform learning using a mini-batch.

As described above, because of having a degree of freedom of selecting a learning method, the step size learning unit 404 can adjust the learning method in order to improve learning performance or to reduce a calculation load in learning.

Third Embodiment.

In the first and second embodiments described above, the learning of the deep NN unit 705 in the step size learning unit 404 is simultaneous learning of all layers. Next, a third embodiment will describe a case, such as incremental learning, in which the NN layers 704-1 to 704-K are incrementally learned one by one.

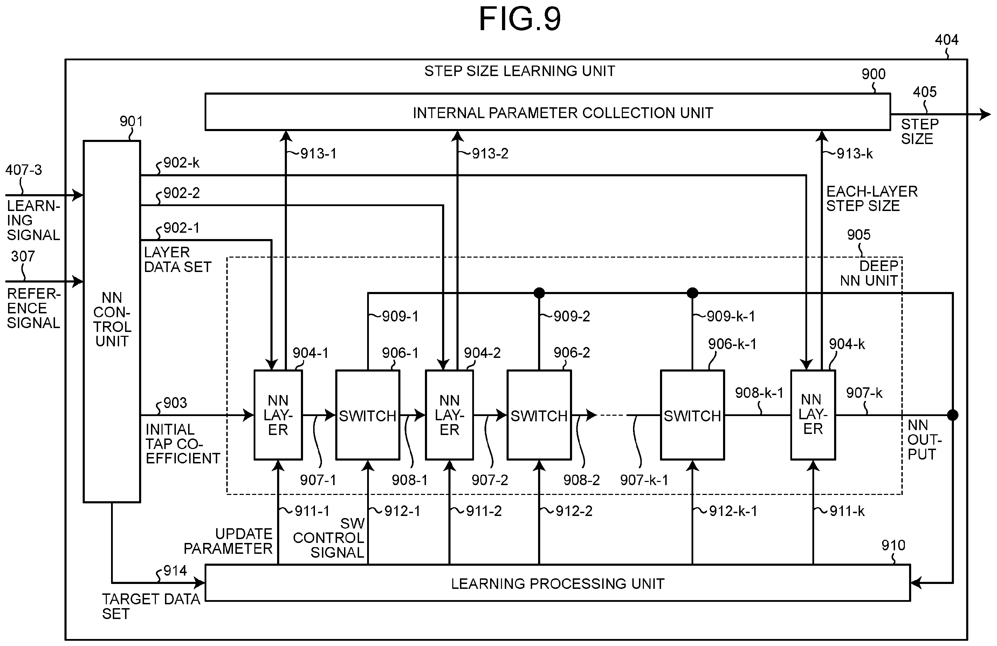

FIG. 9 is a diagram illustrating an exemplary configuration of the step size learning unit 404 included in the equalization processing unit 303 according to the third embodiment. The step size learning unit 404 includes an internal parameter collection unit 900, a NN control unit 901, a deep NN unit 905 including K NN layers 904-1 to 904-K and K-1 switches 906-1 to 906-K-1, and a learning processing unit 910. The number K of the NN layers 904-1 to 904-K can be freely set in accordance with desired communication performance and the like in the communication apparatus 100-1.

Next, the operation of the step size learning unit 404 will be described. In the step size learning unit 404, the NN control unit 901 outputs layer data sets 902-1 to 902-K and outputs an initial tap coefficient 903 in the same way as the processing of the NN control unit 701 in the first embodiment.

The learning processing unit 910 outputs, as update parameters 911-1 to 911-K, an initial value of the previously specified internal parameter 810. The learning processing unit 910 also respectively outputs, to the switches 906-1 to 906-K-1, SW control signals 912-1 to 912-K-1, all of which are made insignificant.

The switches 906-1 to 906-K-1 are switches that change output destinations of signals 907-1 to 907-K-1 respectively acquired from the NN layers 904-1 to 904-K-1, that is, input signals. The switches 906-1 to 906-K-1 output the input signals as signals 908-1 to 908-K-1 when the SW control signals 912-1 to 912-K-1 acquired from the learning processing unit 910 are significant, and output the input signals as signals 909-1 to 909-K-1 when the SW control signals 912-1 to 912-K-1 are insignificant.

The deep NN unit 905 is a multilayer neural network including NN layers 904-1 to 904-K. Each of the NN layers 904-1 to 904-K performs an operation the same as that of the NN layer 704-k in the first embodiment. The NN layers 904-1 to 904-K respectively output the signals 907-1 to 907-K-1 to the switches 906-1 to 906-K-1. Furthermore, the NN layer 904-K at the last stage of the NN layers 904-1 to 904-K outputs a NN output 907-K to the learning processing unit 910.

Output processing for a target data set 914 in the NN control unit 901 is the same as the output processing for the target data set 714 in the NN control unit 701 according to the first embodiment. Furthermore, although the learning in the learning processing unit 910 is the same as the learning in the learning processing unit 708 according to the first embodiment, the learning processing unit 910 learns only the internal parameter 810 held by the internal parameter holding unit 809-1 of the NN layer 904-1 because an effective NN layer is only the NN layer 904-1. In updating the internal parameter 810 of the NN layer 904-1 in learning, the learning processing unit 910 outputs the update parameter 911-1 to the NN layer 904-1 and updates the internal parameter 810 held by the internal parameter holding unit 809-1.

After satisfying the predetermined end condition of the individual learning of the incremental learning, the learning processing unit 910 makes the SW control signal 912-1 significant, makes the SW control signals 912-2 to 912-K-1 insignificant, and repeats from the output processing for the target data set 914 in the NN control unit 901 to the learning in the learning processing unit 910. After satisfying the predetermined end condition of the individual learning of the incremental learning, the learning processing unit 910 makes the SW control signals 912-1 and 912-2 significant, makes the SW control signals 912-3 to 912-K-1 insignificant, and repeats from the output processing for the target data set 914 in the NN control unit 901 to the learning in the learning processing unit 910. In the same way, the learning processing unit 910 makes the SW control signal 912-3 and subsequent signals significant one by one and repeats the output processing for the target data set 914 in the NN control unit 901 to the learning in the learning processing unit 910. After the learning processing unit 910 makes the signals up to and including the SW control signal 912-K-1 significant and satisfies the predetermined end condition of the individual learning of the incremental learning, the internal parameter collection unit 900 collects, as each-layer step sizes 913-1 to 913-K, the internal parameters 810 included in the NN layers 904-1 to 904-K, and outputs the internal parameters 810 as the step size 405.

As described above, the step size learning unit 404 learns the step size 405 by using the incremental learning. The step size learning unit 404 can prevent over-learning, which occurs in simultaneous learning of deep NN layers, by adding the NN layer 904-k one by one in learning.

Fourth Embodiment.

In the third embodiment described above, the step size learning unit 404 implements the processing of adding the NN layer 904-k one by one in the incremental learning by using the switches 906-1 to 906-K-1 and the SW control signals 912-1 to 912-K-1. However, such means for implementing the processing is not particularly limited as long as it is means that can implement the same processing. For example, the learning processing unit 910 may set, to 0, the update parameter 911-k to be output to the NN layer 904-k to be invalidated.

As described above, the step size learning unit 404 controls the validity and invalidity of the NN layer 904-k using only the value of the update parameter 911-k, thus making it possible to reduce the number of the switches 906-1 to 906-K-1, reduce the circuit size, and reduce the processing load.

Fifth Embodiment.

In the first to fourth embodiments described above, the reference signal 307 is used for the adjustment of the tap coefficient 403, the learning of the step size 405, and the like. Next, a fifth embodiment will describe a case where the post-equalization signal is used for adjustment of a tap coefficient, learning of a step size, and the like in a case where a signal equivalent to the reference signal can be generated based on the post-equalization signal.

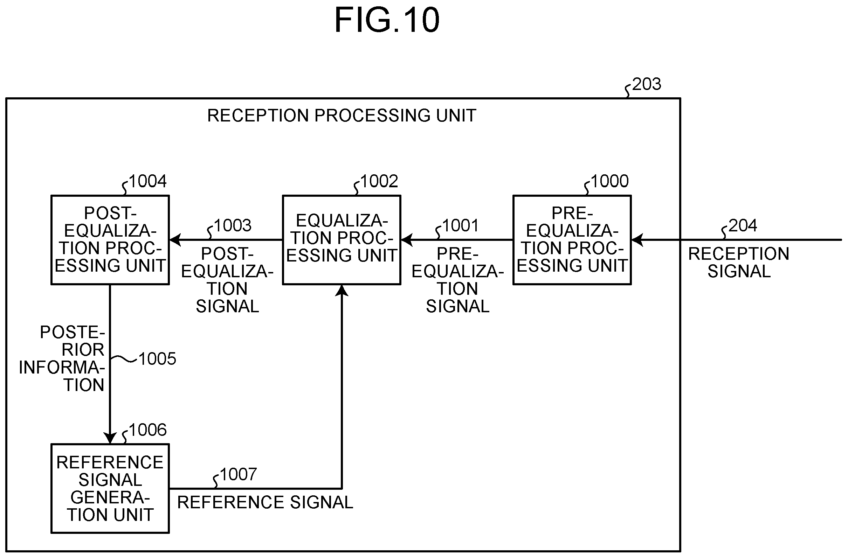

FIG. 10 is a diagram illustrating an exemplary configuration of the reception processing unit 203 included in the transmission and reception processing unit 101 according to the fifth embodiment. The reception processing unit 203 includes a pre-equalization processing unit 1000, an equalization processing unit 1002, a post-equalization processing unit 1004, and a reference signal generation unit 1006.

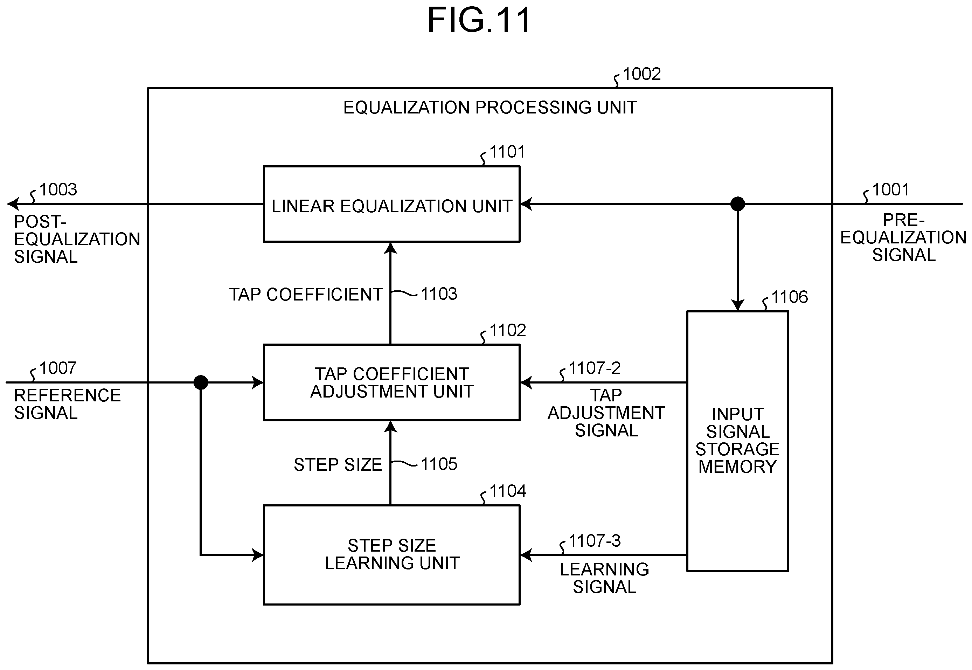

FIG. 11 is a diagram illustrating an exemplary configuration of the equalization processing unit 1002 included in the reception processing unit 203 according to the fifth embodiment. The equalization processing unit 1002 includes a linear equalization unit 1101, a tap coefficient adjustment unit 1102, a step size learning unit 1104, and an input signal storage memory 1106.

Next, an operation of the reception processing unit 203 will be described. The pre-equalization processing unit 1000 performs pre-equalization processing on the reception signal 204 and outputs a pre-equalization signal 1001. The processing of the pre-equalization processing unit 1000 is the same as the processing of the pre-equalization processing unit 301 in the first embodiment. The post-equalization processing unit 1004 acquires a post-equalization signal 1003 from the equalization processing unit 1002, performs, on the post-equalization signal 1003, for example, sampling rate conversion, level adjustment, symbol determination, error correction, and the like as processing necessary after equalization, and outputs, as posterior information 1005, hard decision bit information, soft decision bit information, bit information after error correction, and the like to the reference signal generation unit 1006. Examples of the sampling rate conversion include upsampling, downsampling, and the like. Examples of the level adjustment include amplification, attenuation, and the like. The reference signal generation unit 1006 generates a reference signal 1007 based on the posterior information 1005 acquired from the post-equalization processing unit 1004. The reference signal generation unit 1006 restores a data symbol from, for example, hard decision bit information, soft decision bit information, bit information after error correction, and the like, and outputs the restored data symbol as the reference signal 1007. In this manner, the post-equalization processing unit 1004 performs the post-equalization processing on the post-equalization signal 1003 obtained by performing the linear equalization on the pre-equalization signal 1001 by using the equalization processing unit 1002. The reference signal generation unit 1006 generates the reference signal 1007 based on the posterior information 1005 obtained through the post-equalization processing by the post-equalization processing unit 1004.

In the equalization processing unit 1002, the pre-equalization signal 1001 acquired from the pre-equalization processing unit 1000 is input to the linear equalization unit 1101 and the input signal storage memory 1106. The input signal storage memory 1106 accumulates the pre-equalization signal 1001, and outputs, as a tap adjustment signal 1107-2 and a learning signal 1107-3, the pre-equalization signals 1001 accumulated at the time corresponding to the reference signal 1007. The tap coefficient adjustment unit 1102 and the step size learning unit 1104 perform processing the same as that of the tap coefficient adjustment unit 402 and the step size learning unit 404 in the first to fourth embodiments. The step size learning unit 1104 learns a step size 1105 based on the learning signal 1107-3 and the reference signal 1007. The tap coefficient adjustment unit 1102 adjusts a tap coefficient 1103 based on the tap adjustment signal 1107-2, the reference signal 1007, and the step size 1105. The linear equalization unit 1101 performs linear equalization on the pre-equalization signal 1001 using the tap coefficient 1103 and outputs the post-equalization signal 1003.

As described above, the reception processing unit 203 does not need to include a previously specified signal sequence in the transmission signal 202 by utilizing the pre-equalization signal 1001 for generating the reference signal 1007, and thus, the transmission rate can be improved.

Sixth Embodiment.

In the first to fifth embodiments described above, an LMS is used for updating the tap coefficient. A sixth embodiment will describe a case where various adaptive algorithms such as Normalized LMS (NLMS), Affine Projection Algorithm (APA), and Recursive Least Squares (RLS) are used in updating the tap coefficient.

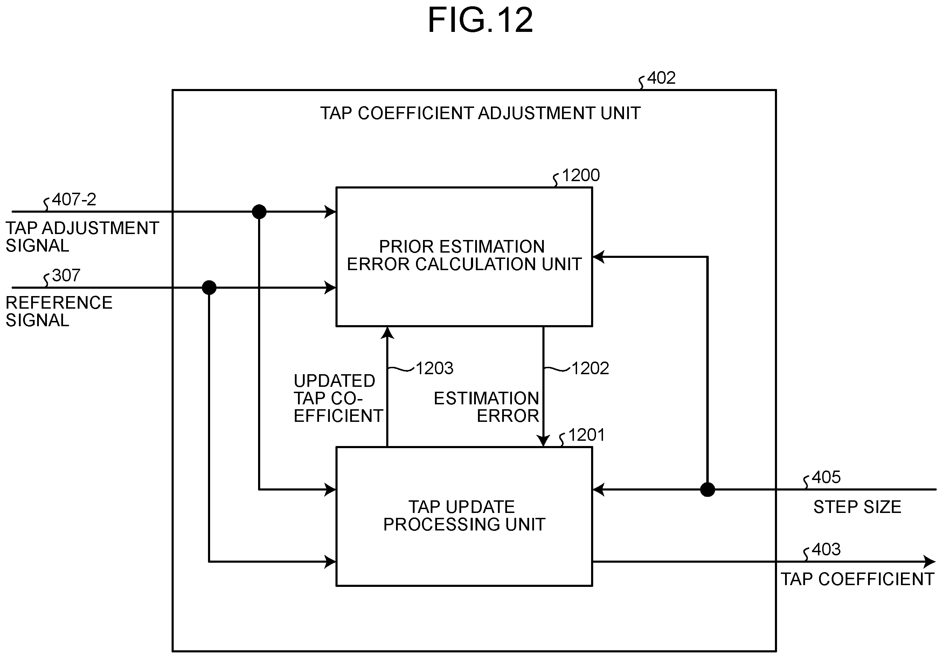

FIG. 12 is a diagram illustrating an exemplary configuration of the tap coefficient adjustment unit 402 included in the equalization processing unit 303 according to the sixth embodiment. The tap coefficient adjustment unit 402 includes a prior estimation error calculation unit 1200 and a tap update processing unit 1201.

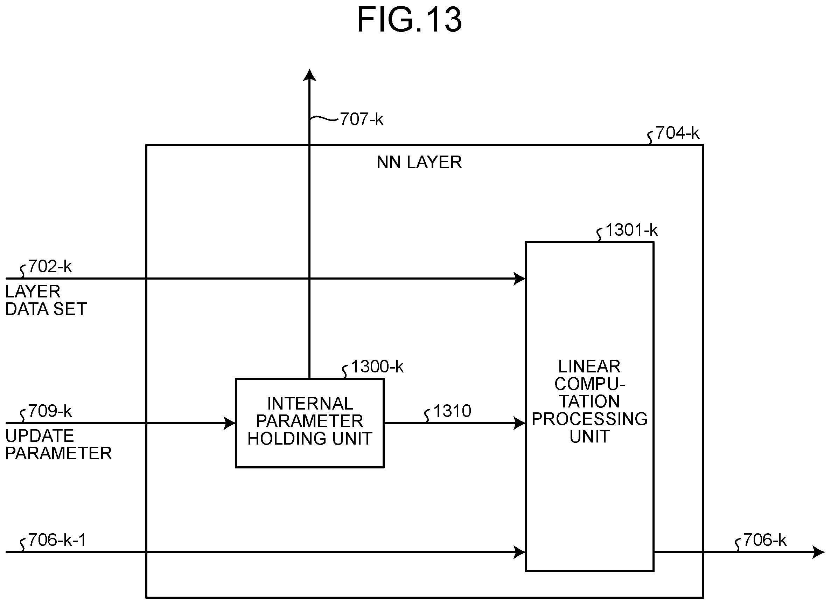

FIG. 13 is a diagram illustrating an exemplary configuration of the NN layer 704-k included in the step size learning unit 404 according to the sixth embodiment. The NN layer 704-k includes an internal parameter holding unit 1300-k and a linear computation processing unit 1301-k. That is, although not illustrated, the step size learning unit 404 includes, in the NN layers 704-1 to 704-K, internal parameter holding units 1300-1 to 1300-K and linear computation processing units 1301-1 to 1301-K.

Next, the operation of the equalization processing unit 303 will be described. As illustrated in FIG. 12, in the tap coefficient adjustment unit 402, the prior estimation error calculation unit 1200 calculates an estimation error 1202 using the tap adjustment signal 407-2, the reference signal 307, the updated tap coefficient 1203, and the step size 405, and outputs the estimation error 1202 to the tap update processing unit 1201. The tap update processing unit 1201 calculates an updated tap coefficient 1203 using the tap adjustment signal 407-2, the reference signal 307, the estimation error 1202, and the step size 405, and outputs the updated tap coefficient 1203 to the prior estimation error calculation unit 1200. The tap coefficient adjustment unit 402 repeats these series of processing K times. Here, K is a value previously specified based on the length and the like of the reference signal 307 and can be freely set.

In the NN layer 704-k of the step size learning unit 404, linear computation processing in the linear computation processing unit 1301-k is the same as the linear computation processing in the prior estimation error calculation unit 1200 and the tap update processing unit 1201 in the tap coefficient adjustment unit 402. The internal parameter holding unit 1300-k has the same configuration as the internal parameter holding unit 809-k illustrated in FIG. 8, and outputs an internal parameter 1310 to the linear computation processing unit 1301-k.

As described above, the equalization processing unit 303 generalizes the processing in the tap coefficient adjustment unit 402 as repetition of the calculation of the estimation error 1202 and the tap update processing, and replaces the processing with the NN layer 704-k as the linear computation processing having the internal parameter 1310. Consequently, the equalization processing unit 303 can perform tap coefficient adjustment using various adaptive algorithms such as Affine Projection Algorithm (APA) and Recursive Least Squares (RLS), and the step size learning unit 404 can learn the internal parameter 1310 to be used in these adaptive algorithms.

Seventh Embodiment.

In the first to sixth embodiments described above, the linear equalization unit performs linear processing. A seventh embodiment will describe a case where the linear equalization unit performs widely linear processing.

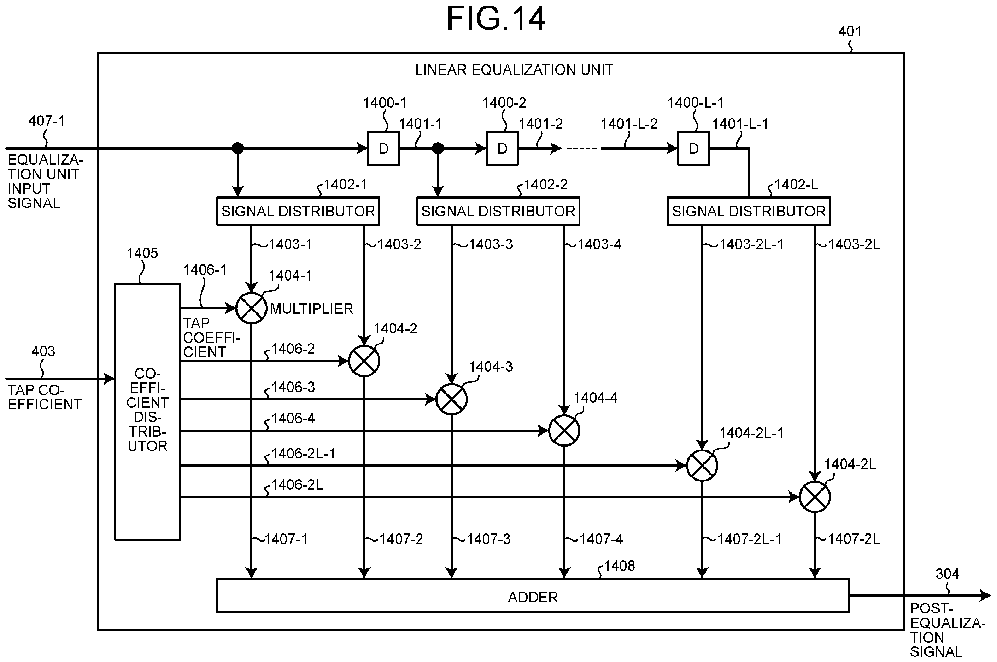

FIG. 14 is a diagram illustrating an exemplary configuration of the linear equalization unit 401 included in the equalization processing unit 303 according to the seventh embodiment. The linear equalization unit 401 includes L-1 delay elements 1400-1 to 1400-L-1, L signal distributors 1402-1 to 1402-L, 2L multipliers 1404-1 to 1404-2L, a coefficient distributor 1405, and an adder 1408.

Next, the operation of the linear equalization unit 401 will be described. In the linear equalization unit 401, the signal distributor 1402-1 outputs, without any change, the equalization unit input signal 407-1 acquired from the input destination control unit 406 as a signal 1403-1 and outputs a complex conjugate signal of the equalization unit input signal 407-1 as a signal 1403-2. The delay elements 1400-1 to 1400-L-1 respectively output signals 1401-1 to 1401-L-1 to the signal distributors 1402-2 to 1402-L. Each of the signal distributors 1402-2 to 1402-L also performs an operation the same as that of the signal distributor 1402-1. That is, the signal distributors 1402-1 to 1402-L respectively output the signals 1403-1 to 1403-2L to the multipliers 1404-1 to 1404-2L.

The coefficient distributor 1405 distributes the tap coefficient 403 acquired from the tap coefficient adjustment unit 402 so as to be assigned to multipliers 1404-1 to 1404-2L, and outputs the tap coefficient 403 as tap coefficients 1406-1 to 1406-2L. The multipliers 1404-1 to 1404-2L respectively perform complex conjugate multiplications of the signals 1403-1 to 1403-2L and the tap coefficients 1406-1 to 1406-2L, and output the resultant signals as signals 1407-1 to 1407-2L. The adder 1408 calculates the sum of the signals 1407-1 to 1407-2L and outputs the sum as the post-equalization signal 304.

As described above, the linear equalization unit 401 performs widely linear processing as the linear equalization. The linear equalization unit 401 performs filter processing on the complex conjugate of the equalization unit input signal 407-1, thus making it possible to perform equalization on a circular signal having a correlation between a real part and an imaginary part of a signal, such as IQ imbalance.

Eighth Embodiment.

In the first to seventh embodiments described above, learning of the step size is processed inside the communication apparatus 100-1. An eighth embodiment will describe a case where the learning of the step size is performed outside a communication apparatus.

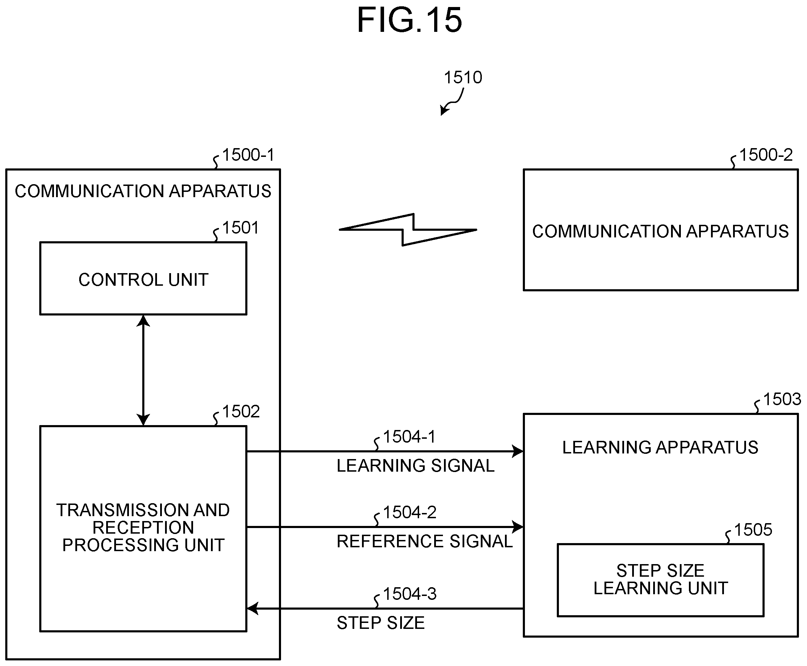

FIG. 15 is a diagram illustrating an exemplary configuration of a communication apparatus 1500-1 according to the eighth embodiment. The communication apparatus 1500-1 includes a control unit 1501 and a transmission and reception processing unit 1502. The transmission and reception processing unit 1502 is connected to a learning apparatus 1503 outside the communication apparatus 1500-1. FIG. 15 also illustrates a communication apparatus 1500-2 that is a communication partner of the communication apparatus 1500-1. Although not illustrated in FIG. 15, the communication apparatus 1500-2 may have a configuration the same as that of the communication apparatus 1500-1 or may have a configuration different from the configuration of the communication apparatus 1500-1. Furthermore, the learning apparatus 1503 includes a step size learning unit 1505. Note that, the communication apparatus 1500-1 and the learning apparatus 1503 constitute a communication system 1510.

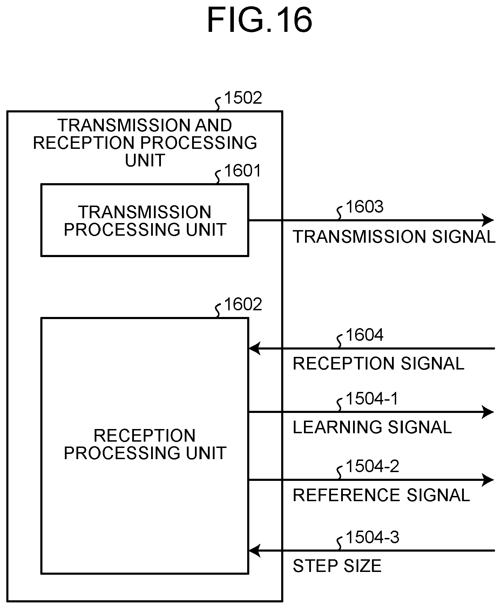

FIG. 16 is a diagram illustrating an exemplary configuration of the transmission and reception processing unit 1502 included in the communication apparatus 1500-1 according to the eighth embodiment. The transmission and reception processing unit 1502 includes a transmission processing unit 1601 and a reception processing unit 1602. The transmission processing unit 1601 transmits a transmission signal 1603 to the communication apparatus 1500-2, and the reception processing unit 1602 receives a reception signal 1604 from the communication apparatus 1500-2.

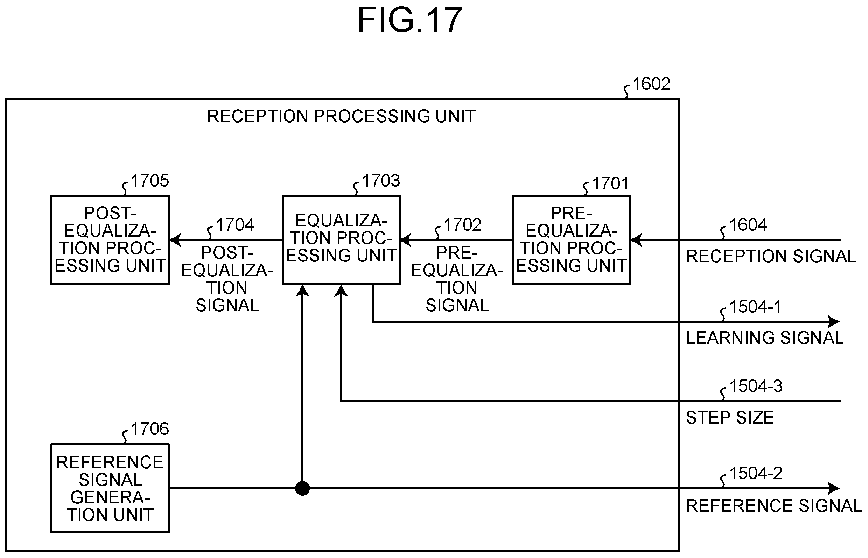

FIG. 17 is a diagram illustrating an exemplary configuration of the reception processing unit 1602 included in the transmission and reception processing unit 1502 according to the eighth embodiment. The reception processing unit 1602 includes a pre-equalization processing unit 1701, an equalization processing unit 1703, a post-equalization processing unit 1705, and a reference signal generation unit 1706. The pre-equalization processing unit 1701 performs pre-equalization processing on the reception signal 1604 and outputs a pre-equalization signal 1702. The reference signal generation unit 1706 generates a reference signal 1504-2. The equalization processing unit 1703 outputs a learning signal 1504-1 to the learning apparatus 1503, performs equalization processing on the pre-equalization signal 1702 using the reference signal 1504-2 acquired from the reference signal generation unit 1706 and a step size 1504-3 acquired from the learning apparatus 1503, and outputs a post-equalization signal 1704. The pre-equalization processing unit 1701, the post-equalization processing unit 1705, and the reference signal generation unit 1706 perform operations the same as those of the pre-equalization processing unit 301, the post-equalization processing unit 305, and the reference signal generation unit 306 illustrated in FIG. 3, respectively.

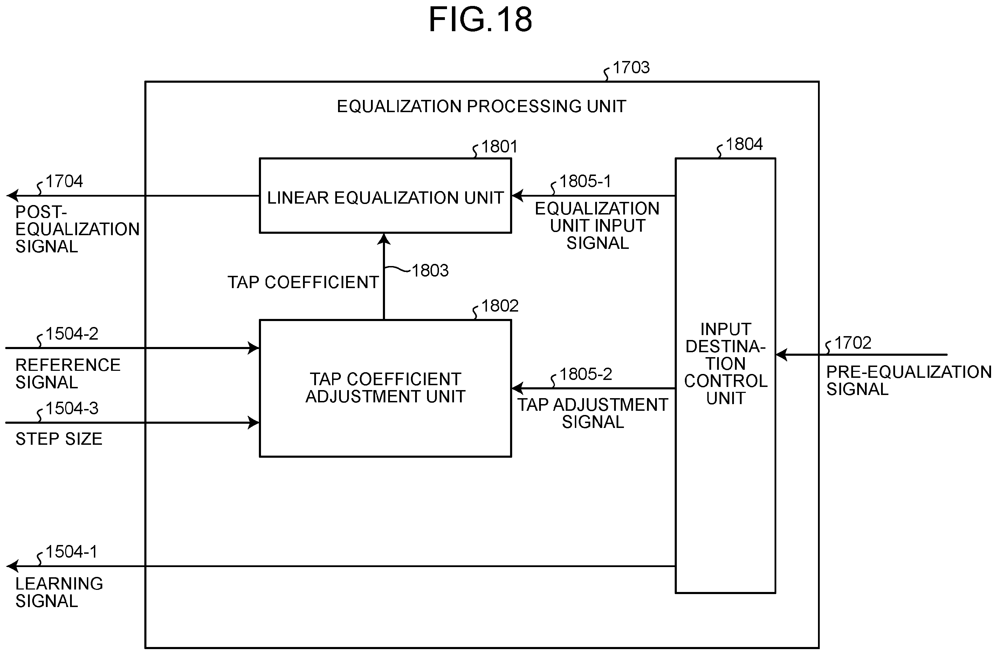

FIG. 18 is a diagram illustrating an exemplary configuration of the equalization processing unit 1703 included in the reception processing unit 1602 according to the eighth embodiment. The equalization processing unit 1703 includes a linear equalization unit 1801, a tap coefficient adjustment unit 1802, and an input destination control unit 1804. The input destination control unit 1804 outputs, as the equalization unit input signal 1805-1, the pre-equalization signal 1702 to the linear equalization unit 1801 in a time range in which a data signal is received. The input destination control unit 1804 also outputs, as the tap adjustment signal 1805-2, the pre-equalization signal 1702 to the tap coefficient adjustment unit 1802 in a time range in which a known sequence such as a preamble is received. The input destination control unit 1804 also outputs, as the learning signal 1504-1, the pre-equalization signal 1702 to the learning apparatus 1503 in a time range in which learning data is received. The tap coefficient adjustment unit 1802 adjusts the tap coefficient 1803 using the reference signal 1504-2, the step size 1504-3, and the tap adjustment signal 1805-2. The linear equalization unit 1801 performs linear equalization on the equalization unit input signal 1805-1 using the tap coefficient 1803 and outputs the post-equalization signal 1704.

Next, an operation of the communication apparatus 1500-1 will be described. In the communication apparatus 1500-1, the transmission and reception processing unit 1502 transmits the learning signal 1504-1 and the reference signal 1504-2 to the learning apparatus 1503. In the learning apparatus 1503, the step size learning unit 1505 adjusts, based on the step size 1504-3, the tap coefficient 1803 to be used in the linear equalization and learns the step size 1504-3 to be used in the communication apparatus 1500-1 that performs linear equalization on the pre-equalization signal 1702 that is the equalization unit input signal 1805-1. Upon receiving the learning signal 1504-1 and the reference signal 1504-2 from the transmission and reception processing unit 1502, the step size learning unit 1505 performs learning processing using the learning signal 1504-1 and the reference signal 1504-2, and outputs the learned step size 1504-3 to the transmission and reception processing unit 1502.

The step size learning unit 1505 of the learning apparatus 1503 has a configuration and performs an operation the same as that of the step size learning unit 404 or the step size learning unit 1104 included in the communication apparatus 100-1 according to the first to seventh embodiments. That is, the step size learning unit 1505 learns the step size 1504-3 by performing processing the same as the processing, in the first to seventh embodiments, in which the step size learning unit 404 learns the step size 405 or in which the step size learning unit 1104 learns the step size 1105. As described above, since the step size learning unit 1505 performs the operation the same as that of the step size learning unit 404 or the step size learning unit 1104, the detailed configuration and operation of the step size learning unit 1505 will not be described. In the communication system 1510, the step size learning unit included in the communication apparatus 100-1 in the first embodiment and the like is included in the learning apparatus 1503 outside the communication apparatus 100-1.

As described above, the communication apparatus 1500-1 performs the equalization processing using the step size 1504-3 acquired from the learning apparatus 1503. Since the learning of the step size 1504-3 is performed by the external learning apparatus 1503, as compared with the communication apparatus 100-1 according to the first embodiment and the like, the communication apparatus 1500-1 can reduce the load due to the learning processing, and also can improve the learning accuracy by using the external learning apparatus 1503 having higher performance.

Ninth Embodiment.

In the eighth embodiment described above, the learning of the step size 1504-3 is performed outside the communication apparatus 1500-1. A ninth embodiment will describe a case where a wireless communication network is used for signal exchange between a communication apparatus and a learning apparatus.

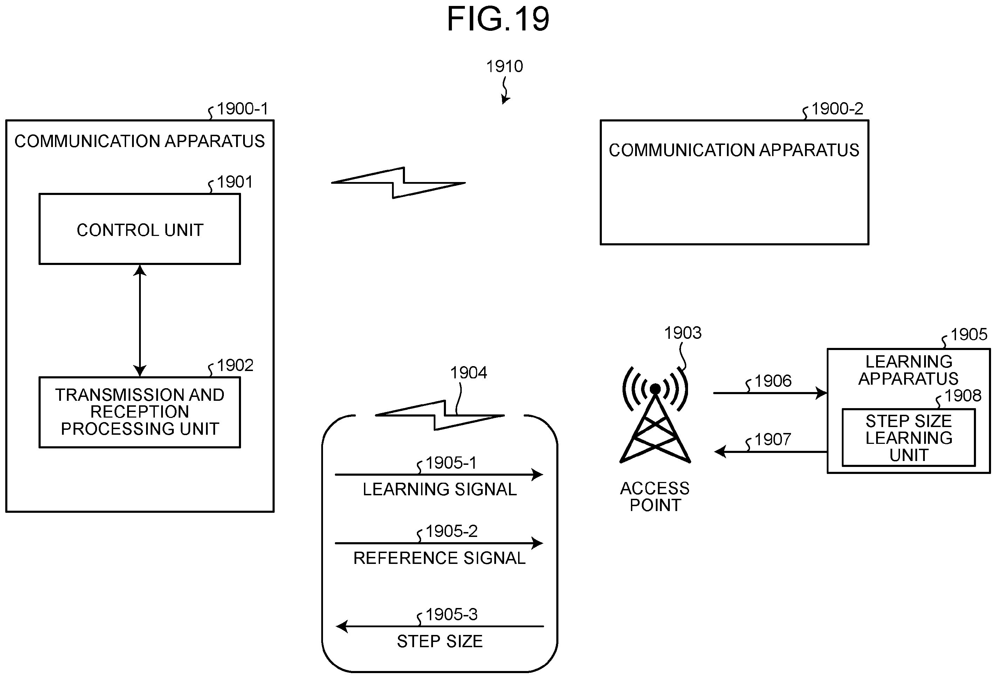

FIG. 19 is a diagram illustrating an exemplary configuration of a communication apparatus 1900-1 according to the ninth embodiment. The communication apparatus 1900-1 includes a control unit 1901 and a transmission and reception processing unit 1902. FIG. 19 also illustrates a communication apparatus 1900-2 that is a communication partner of the communication apparatus 1900-1. The transmission and reception processing unit 1902 is connected to an access point 1903 via a wireless link 1904. The access point 1903 is connected to a learning apparatus 1905. The access point 1903 is a device used in a wireless communication network, for example, an access point of a wireless Local Area Network (LAN), a base station in a public mobile line, or the like. Note that, the communication apparatus 1900-1, the access point 1903, and the learning apparatus 1905 constitute a communication system 1910.

Next, an operation of the communication apparatus 1900-1 will be described. In the same way as the transmission and reception processing unit 1502 of the communication apparatus 1500-1 in the eighth embodiment, the transmission and reception processing unit 1902 of the communication apparatus 1900-1 transmits, as a signal 1906, the learning signal 1905-1 and the reference signal 1905-2 to the learning apparatus 1905 through the access point 1903 via the wireless link 1904. The learning apparatus 1905 includes a step size learning unit 1908 having a function the same as that of the step size learning unit 1505 illustrated in FIG. 15. In the same way as the step size learning unit 1505 according to the eighth embodiment, upon receiving the learning signal 1905-1 and the reference signal 1905-2 from the transmission and reception processing unit 1902, the step size learning unit 1908 performs learning processing using the learning signal 1905-1 and the reference signal 1905-2, and outputs, as a signal 1907, the learned step size 1905-3 to the transmission and reception processing unit 1902.

As described above, the learning apparatus 1905 performs communication with the communication apparatus 1900-1 through wireless communication via a wireless communication network. When the external learning apparatus 1905 learns the step size 1905-3, the communication apparatus 1900-1 transmits and receives signals necessary for learning via the wireless link 1904. Thus, the communication apparatus 1900-1 and the learning apparatus 1905 do not need to be identical in location, and the communication apparatus 1900-1 can be moved.

Tenth Embodiment.

In the ninth embodiment described above, the communication apparatus 1900-1 transmits, as the learning signal 1905-1, the transmission signal 1603 to the learning apparatus 1905. A tenth embodiment will describe a case where the communication apparatus 1900-1 conceals the learning signal.

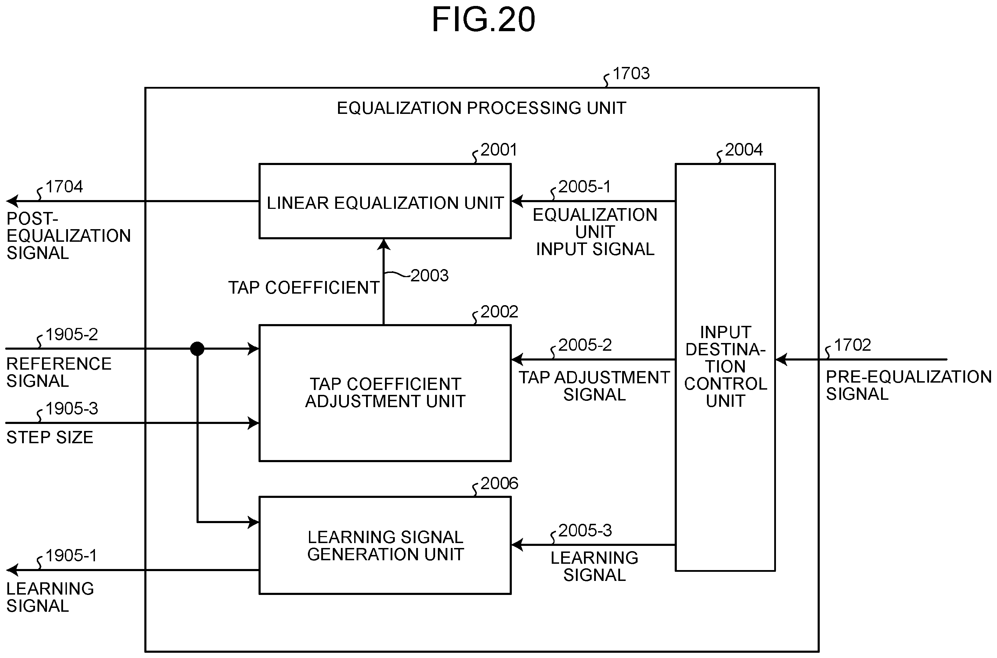

FIG. 20 is a diagram illustrating an exemplary configuration of the equalization processing unit 1703 included in the reception processing unit 1602 according to the tenth embodiment. The equalization processing unit 1703 includes a linear equalization unit 2001, a tap coefficient adjustment unit 2002, an input destination control unit 2004, and a learning signal generation unit 2006. The input destination control unit 2004 outputs, as the equalization unit input signal 2005-1, the pre-equalization signal 1702 to the linear equalization unit 2001 in the time range in which the data signal is received. The input destination control unit 2004 also outputs, as the tap adjustment signal 2005-2, the pre-equalization signal 1702 to the tap coefficient adjustment unit 2002 in the time range in which the known sequence such as the preamble is received. The input destination control unit 2004 also outputs, as the learning signal 2005-3, the pre-equalization signal 1702 to the learning signal generation unit 2006 in the time range in which the learning data is received. The learning signal generation unit 2006 generates a learning signal 1905-1, using the reference signal 1905-2 and the learning signal 2005-3, and outputs the learning signal 1905-1 to the learning apparatus 1905. The tap coefficient adjustment unit 2002 adjusts the tap coefficient 2003, using the reference signal 1905-2, the step size 1905-3, and the tap adjustment signal 2005-2. The linear equalization unit 2001 performs linear equalization on the equalization unit input signal 2005-1, using the tap coefficient 2003, and outputs the post-equalization signal 1704.

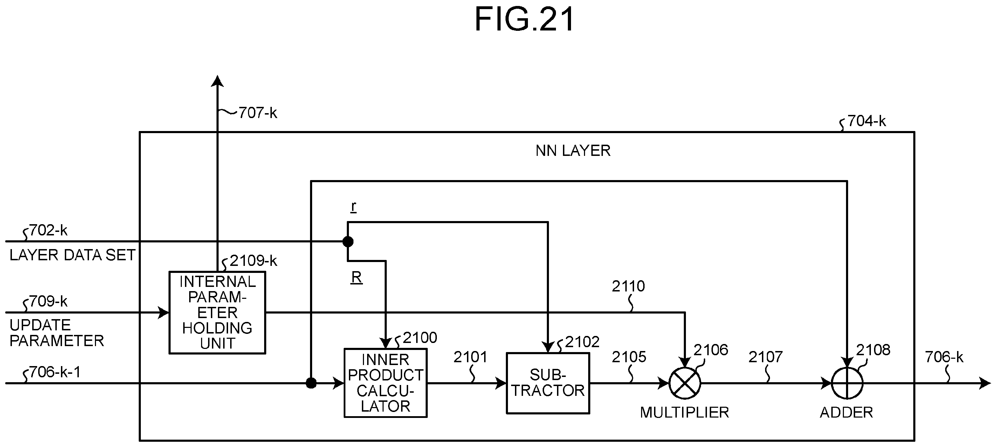

FIG. 21 is a diagram illustrating an exemplary configuration of the NN layer 704-k included in the step size learning unit 1908 of the learning apparatus 1905 according to the tenth embodiment. The NN layer 704-k includes an internal parameter holding unit 2109-k, an inner product calculator 2100, a subtractor 2102, a multiplier 2106, and an adder 2108.

Next, the operation of the equalization processing unit 1703 will be described. When an i-th learning signal 2005-3 is represented by C(i) and a k-th reference signal 1905-2 is represented by D(k), the learning signal generation unit 2006 calculates, according to Formula (7), a data vector c(k) from a combination of C(i+K), C(i+K-1), C(i+K-2), ..., and C(i-L+1) and D(0), D(1), ..., and D(K-1). Furthermore, the learning signal generation unit 2006 calculates, according to Formulas (11) and (12), a correlation matrix R(k) and a correlation vector r(k), using the data vector c(k) and D(0), D(1), ..., and D(K-1), and outputs the correlation matrix R(k) and the correlation vector r(k) as the learning signal 1905-1.

$$R(k) = c(k)c^H(k) \quad \ldots (11)$$

$$r(k) = (D(k)*) \times c(k) \quad \ldots (12)$$

The learning apparatus 1905 receives the learning signal 1905-1 from the communication apparatus 1900-1. In the learning apparatus 1905, the NN control unit 701 of the step size learning unit 1908 calculates, according to Formula (13), the target tap coefficient vector u from the correlation matrix R(k) and the correlation vector r(k) included in the learning signal 1905-1. Furthermore, the NN control unit 701 outputs, as the layer data set 702-k, the correlation matrix R(k) and the correlation vector r(k) included in the learning signal 1905-1 in accordance with an index k of the NN layers 704-1 to 704-K.

$$u=(\Sigma_{(k=0)}^{(k=K-1)}R(k))^{(-1)}(\Sigma_{(k=0)}^{(k=K-1)}r(k)) \qquad (13)$$

In the NN layer 704-k, the internal parameter holding unit 2109-k holds an internal parameter 2110 to be learned, and, upon acquiring the update parameter 709-k from the learning processing unit 708, updates the held internal parameter 2110 to the update parameter 709-k. The step size learning unit 1908 includes the NN layers 704-1 to 704-K, and thus, includes the internal parameter holding units 2109-1 to 2109-K. The inner product calculator 2100 sets the signal 706-k-1 acquired from the layer at the previous stage as W(k-1), calculates, according to Formula (14), an inner product Z with the correlation matrix R(k) included in the layer data set 702-k, and outputs the inner product Z as a signal 2101.

$$Z=R(k)W(k-1) \quad ...(14)$$

The subtractor 2102 takes a difference r(k)-Z between the signal 2101 acquired from the inner product calculator 2100 and the correlation vector r(k) included in the layer data set 702-k, and outputs the difference r(k)-Z as a signal 2105.

The multiplier 2106 multiplies the signal 2105 acquired from the subtractor 2102 by the internal parameter 2110 output from the internal parameter holding unit 2109-k, and outputs the resultant signal as a signal 2107.

The adder 2108 calculates the sum of the signal 706-k-1 and the signal 2107 acquired from the multiplier 2106, and outputs the sum as a signal 706-k.

As described above, the communication apparatus 1900-1 calculates the correlation matrix R(k) and the correlation vector r(k) from the pre-equalization signal 1702 that is the learning signal 2005-3 and the reference signal 1905-2, and transmits, as the learning signal 1905-1, the correlation matrix R(k) and the correlation vector r(k) to the learning apparatus 1905. The step size learning unit 1908 of the learning apparatus 1905 learns the step size 1905-3, using the correlation matrix R(k) and the correlation vector r(k). The communication apparatus 1900-1 sets the learning signal 1905-1 output to the outside not as the reception signal itself but as the correlation matrix R(k) and the correlation vector r(k), thus making it impossible to easily estimate the reception signal itself from the learning signal 1905-1. This enables use of learning in an external device while maintaining the confidentiality of the reception signal.

Eleventh Embodiment.

In the tenth embodiment described above, closed learning is performed on one communication apparatus 1900-1. An eleventh embodiment will describe Federated Learning using a plurality of communication apparatuses.

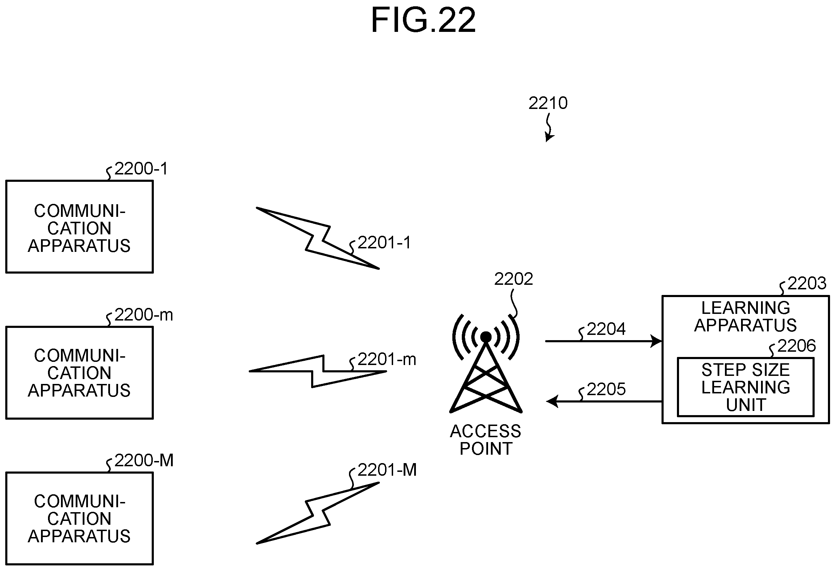

FIG. 22 is a diagram illustrating an exemplary configuration of a communication system 2210 in a case where federated learning is performed by M communication apparatuses 2200-1 to 2200-M according to the eleventh embodiment. The communication system 2210 includes the communication apparatuses 2200-1 to 2200-M, an access point 2202, and a learning apparatus 2203. In the communication apparatuses 2200-1 to 2200-M, the communication apparatus 2200-m is the m-th communication apparatus. Here, m is an integer greater than or equal to 1 and less than or equal to M. The communication apparatuses 2200-1 to 2200-M are connected to the access point 2202 via wireless links 2201-1 to 2201-M, respectively. The wireless links 2201-1 to 2201-M are each the same as the wireless link 1904 illustrated in FIG. 19. The access point 2202 is connected to the learning apparatus 2203.

Next, the operation will be described. The communication apparatuses 2200-1 to 2200-M each transmit a reference signal 1905-2 and a learning signal 1905-1 that are necessary for learning to the learning apparatus 2203 through the access point 2202 via a corresponding one of the wireless links 2201-1 to 2201-M. The step size learning unit 2206 of the learning apparatus 2203 performs learning using the reference signals 1905-2 and the learning signals 1905-1, which are the signals 2204 received from one or more of the communication apparatuses 2200-1 to 2200-M, and calculates step sizes 1905-3 common to the communication apparatuses 2200-1 to 2200-M. The learning apparatus 2203 outputs the calculated step sizes 1905-3 as signals 2205 and transmits the signals 2205 to the communication apparatuses 2200-1 to 2200-M via the wireless links 2201-1 to 2201-M, respectively, through the access point 2202.

As described above, the step size learning unit 2206 acquires the learning signal 1905-1, that is, the pre-equalization signal 1702 and the reference signal 1905-2 from each of the plurality of communication apparatuses 2200-1 to 2200-M and learns the step size 1905-3. The step size learning unit 2206 performs learning using the data of the plurality of communication apparatuses 2200-1 to 2200-M, thus making it possible to efficiently collect and use a large number of data necessary for learning and to improve the accuracy of learning.

Twelfth Embodiment.

A twelfth embodiment will describe, with reference to a flowchart, the operation of the communication apparatus 100-1 by taking the communication apparatus 100-1 according to the first embodiment as an example. Furthermore, a hardware configuration of the communication apparatus 100-1 will be described.

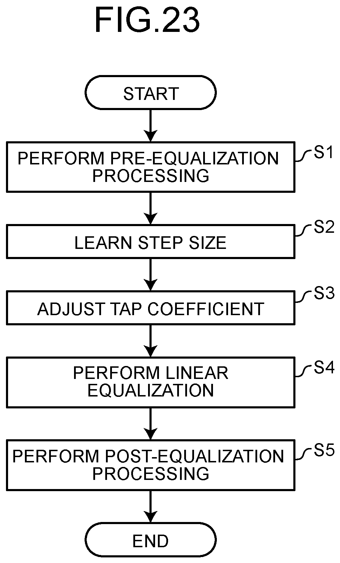

FIG. 23 is a flowchart illustrating the operation of the communication apparatus 100-1 according to the twelfth embodiment. In the communication apparatus 100-1, the pre-equalization processing unit 301 of the reception processing unit 203 performs pre-equalization processing on the reception signal 204 (step S1). In the equalization processing unit 303, the step size learning unit 404 learns the step size 405, using the reference signal 307 and the learning signal 407-3 (step S2). The tap coefficient adjustment unit 402 adjusts the tap coefficient 403, using the reference signal 307, the step size 405, and the tap adjustment signal 407-2 (step S3). The linear equalization unit 401 performs linear equalization on the equalization unit input signal 407-1, using the tap coefficient 403 (step S4), and outputs the post-equalization signal 304. The post-equalization processing unit 305 of the reception processing unit 203 performs post-equalization processing on the post-equalization signal 304 (step S5).

Next, the hardware configuration of the communication apparatus 100-1 will be described. In the communication apparatus 100-1, the transmission and reception processing unit 101 and the control unit 102 are implemented by processing circuitry. The processing circuitry may include a memory and a processor executing a program stored in the memory or may include dedicated hardware. The processing circuitry is also referred to as a control circuit.

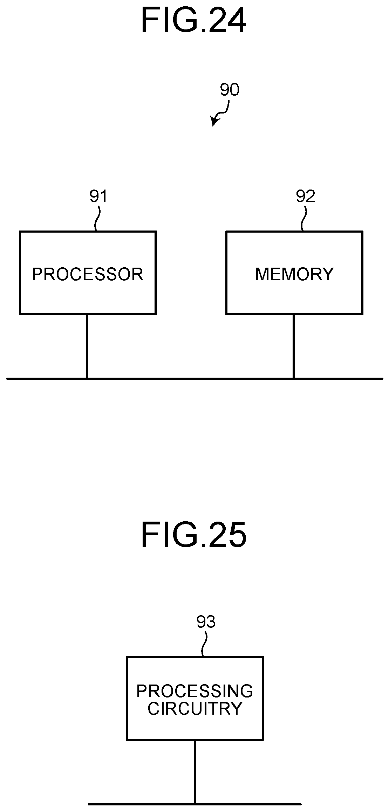

FIG. 24 is a diagram illustrating an exemplary configuration of processing circuitry 90 in a case where a processor 91 and a memory 92 implement the processing circuitry that implements the communication apparatus 100-1 according to the twelfth embodiment. The processing circuitry 90 illustrated in FIG. 24 is a control circuit and includes the processor 91 and the memory 92. In the case where the processing circuitry 90 includes the processor 91 and the memory 92, each function of the processing circuitry 90 is implemented by software, firmware, or a combination of software and firmware. The software or the firmware is described as a program and stored in the memory 92. In the processing circuitry 90, the processor 91 reads and executes the program stored in the memory 92 to implement each function. That is, the processing circuitry 90 includes the memory 92 for storing a program with which processing of the communication apparatus 100-1 is executed as a result. It can also be said that this program is a program for causing the communication apparatus 100-1 to execute each function implemented by the processing circuitry 90. This program may be provided by a storage medium storing the program or may be provided by other means such as a communication medium.

It can also be said that the program is a program for causing the communication apparatus 100-1 to execute: a linear equalization step of, by the linear equalization unit 401, performing linear equalization on the equalization unit input signal 407-1 that is the reception signal; a tap coefficient adjustment step of, by the tap coefficient adjustment unit 402, adjusting, based on the step size 405, a tap coefficient 403 to be used in the linear equalization; and a step size learning step of, by the step size learning unit 404, learning the step size 405, in which in the step size learning step, the program causes the communication apparatus 100-1 to execute: a computation step of, by each of the NN layers 704-1 to 704-K, computing an updated tap coefficient based on the specified initial tap coefficient 703 or the signal 706-k that is the updated tap coefficient output from the NN layer 704-k at a previous stage, the pre-equalization signal 302 that is the learning signal 407-3 included in the layer data set 702-k, and the reference signal 307 that is the specified signal sequence included in the layer data set 702-k, and holding the internal parameter 810 to be used in the computing; a learning step of, by the learning processing unit 708, performing learning using an error function in the learning as a mean square error between a tap coefficient based on a least square solution calculated from the pre-equalization signal 302 that is the learning signal 407-3 and the reference signal 307 and the NN output 706-K that is the updated tap coefficient output from the NN layer 704-K that is the last stage of the NN layers 704-1 to 704-K, and updating the internal parameters 810; and an update step of, by the internal parameter collection unit 700, updating the step size 405 based on the each-layer step sizes 707-1 to 707-K that are the internal parameters 810 collected from the NN layers 704-1 to 704-K.

Here, the processor 91 is, for example, a Central Processing Unit (CPU), a processing unit, a computation unit, a microprocessor, a microcomputer, a Digital Signal Processor (DSP), or the like. Additionally, the memory 92 corresponds to, for example, a nonvolatile or volatile semiconductor memory such as a Random Access Memory (RAM), a Read Only Memory (ROM), a flash memory, an Erasable Programmable ROM (EPROM), or an Electrically EPROM (EEPROM, registered trademark), a magnetic disk, a flexible disk, an optical disk, a compact disk, a mini disk, a Digital Versatile Disc (DVD), or the like.

FIG. 25 is diagram illustrating an example of processing circuitry 93 in a case where dedicated hardware constitutes the processing circuitry that implements the communication apparatus 100-1 according to the twelfth embodiment. The processing circuitry 93 illustrated in FIG. 25 corresponds to, for example, a single circuit, a combined circuit, a programmed processor, a parallel-programmed processor, an Application Specific Integrated Circuit (ASIC), a Field Programmable Gate Array (FPGA), or a combination thereof. Some of the functions of the processing circuitry may be implemented by dedicated hardware, and the some may be implemented by software or firmware. In this manner, the processing circuitry can implement the above-described functions using dedicated hardware, software, firmware, or a combination thereof.

The configurations described in the above embodiments are illustrative only and may be combined with the other known techniques, the embodiments may be combined with each other, and part of each of the configurations may be omitted or modified without departing from the gist.

Reference Signs List

100-1, 100-2, 1500-1, 1500-2, 1900-1, 1900-2, 2200-1 to 2200-M communication apparatus; 101, 1502, 1902 transmission and reception processing unit; 102, 1501, 1901 control unit; 201, 1601 transmission processing unit; 202, 1603 transmission signal; 203, 1602 reception processing unit; 204, 1604 reception signal; 301, 1000, 1701 pre-equalization processing unit; 302, 1001, 1702 pre-equalization signal; 303, 1002, 1703 equalization processing unit; 304, 1003, 1704 post-equalization signal; 305, 1004, 1705 post-equalization processing unit; 306, 1006, 1706 reference signal generation unit; 307, 1007, 1504-2, 1905-2 reference signal; 401, 1101, 1801, 2001 linear equalization unit; 402, 1102, 1802, 2002 tap coefficient adjustment unit; 403, 504-1 to 504-L, 604-1 to 604-L, 1103, 1406-1 to 1406-2L, 1803, 2003 tap coefficient; 404, 1104, 1505, 1908, 2206 step size learning unit; 405, 1105, 1504-3, 1905-3 step size; 406, 1804, 2004 input destination control unit; 407-1, 1805-1, 2005-1 equalization unit input signal; 407-2, 1107-2, 1805-2, 2005-2 tap adjustment signal; 407-3, 1107-3, 1504-1, 1905-1, 2005-3 learning signal; 500-1 to 500-L-1, 505-1 to 505-L, 600-1 to 600-L-1, 605-1 to 605-L, 607, 609, 706-1 to 706-K-1, 801, 803, 805, 807, 907-1 to 907-K-1, 908-1 to 908-K-1, 909-1 to 909-K-1, 1401-1 to 1401-L-1, 1403-1 to 1403-2L, 1407-1 to 1407-2L, 1906, 1907, 2101, 2105, 2107, 2204, 2205 signal; 501-1 to 501-L-1, 601-1 to 601-L-1, 1400-1 to 1400-L-1 delay element; 502-1 to 502-L, 602-1 to 602-L, 804, 806, 1404-1 to 1404-2L, 2106 multiplier; 503, 603, 1405 coefficient distributor; 506, 606, 808, 1408, 2108 adder; 608, 802, 2102 subtractor; 610 tap coefficient update unit; 611, 1203 updated tap coefficient; 700, 900 internal parameter collection unit; 701, 901 NN control unit; 702-1 to 702-K, 902-1 to 902-K layer data set; 703, 903 initial tap coefficient; 704-1 to 704-K, 904-1 to 904-K NN layer; 705, 905 deep NN unit; 706-K, 907-K NN output; 707-1 to 707-K, 913-1 to 913-K each-layer step size; 708, 910 learning processing unit; 709-1 to 709-K, 911-1 to 911-K update parameter; 714, 914 target data set; 800, 2100 inner product calculator; 809-1 to 809-K, 1300-1 to 1300-K, 2109-1 to 2109-K internal parameter holding unit; 810, 1310, 2110 internal parameter; 906-1 to 906-K-1 switch; 912-1 to 912-K-1 SW control signal; 1005 posterior information; 1106 input signal storage memory; 1200 prior estimation error calculation unit; 1201 tap update processing unit; 1202 estimation error; 1301-1 to 1301-K linear computation processing unit; 1402-1 to 1402-L signal distributor; 1503, 1905, 2203 learning apparatus; 1510, 1910, 2210 communication system; 1903, 2202 access point; 1904, 2201-1 to 2201-M wireless link; 2006 learning signal generation unit.

**Claims**

1. A communication apparatus comprising:

   a linear equalization unit to perform linear equalization on a reception signal;
   a tap coefficient adjustment unit to adjust, based on a step size, a tap coefficient to be used in the linear equalization; and
   a step size learning unit to learn the step size,
   wherein
   the step size learning unit includes:

      a plurality of neural network layers to each perform computation of an updated tap coefficient based on a specified initial tap coefficient or an updated tap coefficient output from the neural network layer at a previous stage, the reception signal, and a reference signal that is a specified signal sequence, and to each hold an internal parameter to be used in the computation;
      a learning processing unit to perform learning using an error function in the learning as a mean square error between a tap coefficient based on a least square solution calculated from the reception signal and the reference signal and an updated tap coefficient output from the neural network layer at a last stage of the plurality of neural network layers, and to update the internal parameters; and
      an internal parameter collection unit to update the step size based on the internal parameters collected from the plurality of neural network layers.

2. The communication apparatus according to claim 1, wherein
   the step size learning unit learns the step size by incremental learning.

3. The communication apparatus according to claim 1 or 2, comprising:

   a post-equalization processing unit to perform post-equalization processing on a post-equalization signal obtained by performing the linear equalization on the reception signal by the linear equalization unit; and
   a reference signal generation unit to generate the reference signal based on posterior information obtained through the post-equalization processing.

4. The communication apparatus according to any one of claims 1 to 3, wherein
the linear equalization unit performs widely linear processing as the linear equalization.

5. A learning apparatus comprising:

a step size learning unit to learn the step size to be used in a communication apparatus to adjust, based on the step size, a tap coefficient to be used in linear equalization and to perform the linear equalization on a reception signal, wherein
the step size learning unit includes:

a plurality of neural network layers to each perform computation of an updated tap coefficient based on a specified initial tap coefficient or an updated tap coefficient output from the neural network layer at a previous stage, the reception signal, and a reference signal that is a specified signal sequence, and to each hold an internal parameter to be used in the computation;
a learning processing unit to perform learning using an error function in the learning as a mean square error between a tap coefficient based on a least square solution calculated from the reception signal and the reference signal and an updated tap coefficient output from the neural network layer at a last stage of the plurality of neural network layers, and to update the internal parameters; and
an internal parameter collection unit to update the step size based on the internal parameters collected from the plurality of neural network layers.

6. The learning apparatus according to claim 5, wherein
the learning apparatus performs communication with the communication apparatus through wireless communication via a wireless communication network.

7. The learning apparatus according to claim 6, wherein
the step size learning unit acquires the reception signal and the reference signal from each of a plurality of the communication apparatuses and learns the step size.

8. The learning apparatus according to claim 6 or 7, wherein

the communication apparatus calculates a correlation matrix and a correlation vector from the reception signal and the reference signal, and transmits the correlation matrix and the correlation vector to the learning apparatus, and
the step size learning unit learns the step size using the correlation matrix and the correlation vector.

9. A communication system comprising:

the learning apparatus according to claim 5; and
a communication apparatus to perform equalization processing using a step size acquired from the learning apparatus.

10. A control circuit for controlling a communication apparatus, the control circuit causing the communication apparatus to execute:

performing linear equalization on a reception signal;
adjusting, based on a step size, a tap coefficient to be used in the linear equalization;
learning the step size;
in the learning the step size,
in each of a plurality of neural network layers, computing an updated tap coefficient based on a specified initial tap coefficient or an updated tap coefficient output from the neural network layer at a previous stage, the reception signal, and a reference signal that is a specified signal sequence, and holding an internal parameter to be used in the computing;
performing learning using an error function in the learning as a mean square error between a tap coefficient based on a least square solution calculated from the reception signal and the reference signal and an updated tap coefficient output from the neural network layer at a last stage of the plurality of neural network layers, and updating the internal parameters; and

updating the step size based on the internal parameters collected from the plurality of neural network layers.

11. A storage medium storing a program for controlling a communication apparatus, the program causing the communication apparatus to execute:

performing linear equalization on a reception signal;

adjusting, based on a step size, a tap coefficient to be used in the linear equalization;

learning the step size;

in the learning the step size,

in each of a plurality of neural network layers, computing an updated tap coefficient based on a specified initial tap coefficient or an updated tap coefficient output from the neural network layer at a previous stage, the reception signal, and a reference signal that is a specified signal sequence, and holding an internal parameter to be used in the computing;

performing learning using an error function in the learning as a mean square error between a tap coefficient based on a least square solution calculated from the reception signal and the reference signal and an updated tap coefficient output from the neural network layer at a last stage of the plurality of neural network layers, and updating the internal parameters; and

updating the step size based on the internal parameters collected from the plurality of neural network layers.

12. A step size update method comprising:

a linear equalization step of, by a linear equalization unit, performing linear equalization on a reception signal;

a tap coefficient adjustment step of, by a tap coefficient adjustment unit, adjusting, based on a step size, a tap coefficient to be used in the linear equalization; and

a step size learning step of, by a step size learning unit, learning the step size, wherein

the step size learning step includes:

a computation step of, by each of a plurality of neural network layers, computing an updated tap coefficient based on a specified initial tap coefficient or an updated tap coefficient output from the neural network layer at a previous stage, the reception signal, and a reference signal that is a specified signal sequence, and holding an internal parameter to be used in the computing;

a learning step of, by a learning processing unit, performing learning using an error function in the learning as a mean square error between a tap coefficient based on a least square solution calculated from the reception signal and the reference signal and an updated tap coefficient output from the neural network layer at a last stage of the plurality of neural network layers, and updating the internal parameters; and

an update step of, by an internal parameter collection unit, updating the step size based on the internal parameters collected from the plurality of neural network layers.

# FIG.1

COMMUNICATION APPARATUS 100-2

COMMUNICATION APPARATUS 100-1

CONTROL UNIT 102

TRANSMISSION AND RECEPTION PROCESSING UNIT 101

# FIG.2

# FIG.3

RECEPTION PROCESSING UNIT — 203

POST-EQUALIZATION PROCESSING UNIT — 305

EQUALIZATION PROCESSING UNIT — 303

PRE-EQUALIZATION PROCESSING UNIT — 301

POST-EQUALIZATION SIGNAL — 304

PRE-EQUALIZATION SIGNAL — 302

RECEPTION SIGNAL — 204

REFERENCE SIGNAL GENERATION UNIT — 306

REFERENCE SIGNAL — 307

EP 4 583 413 A1

# FIG.4

EQUALIZATION PROCESSING UNIT — 303

LINEAR EQUALIZATION UNIT — 401

POST-EQUALIZATION SIGNAL — 304

EQUALIZATION UNIT INPUT SIGNAL — 407-1

TAP COEFFICIENT — 403

TAP COEFFICIENT ADJUSTMENT UNIT — 402

REFERENCE SIGNAL — 307

TAP ADJUSTMENT SIGNAL — 407-2

INPUT DESTINA-TION CONTROL UNIT — 406

PRE-EQUALIZATION SIGNAL — 302

STEP SIZE — 405

STEP SIZE LEARNING UNIT — 404

LEARNING SIGNAL — 407-3

# FIG.5

EP 4 583 413 A1

# FIG.6

TAP COEFFICIENT ADJUSTMENT UNIT — 402

EP 4 583 413 A1

# FIG.7

STEP SIZE LEARNING UNIT 404

INTERNAL PARAMETER COLLECTION UNIT 700

STEP SIZE 405

701

407-3 LEARNING SIGNAL

307 REFER-ENCE SIGNAL

NN CON-TROL UNIT

702-k
702-2
702-1
LAYER DATA SET

703
INITIAL TAP COEFFICIENT

707-1
707-2
707-k

EACH-LAYER STEP SIZE

705 DEEP NN UNIT

704-1
704-2
704-k

NN LAYER
706-1
NN LAYER
706-2
706-k-1
NN LAYER
706-k
NN OUT-PUT

UPDATE PARAMETER 709-1
709-2
709-k

714 TARGET DATA SET

708
LEARNING PROCESSING UNIT

EP 4 583 413 A1

# FIG.8

# FIG.9

STEP SIZE LEARNING UNIT 404

INTERNAL PARAMETER COLLECTION UNIT 900 → 405 STEP SIZE

EP 4 583 413 A1

# FIG.10

**RECEPTION PROCESSING UNIT** — 203

POST-EQUALIZA-TION PROC-ESSING UNIT — 1004

EQUALIZA-TION PROC-ESSING UNIT — 1002

PRE-EQUALIZA-TION PROC-ESSING UNIT — 1000

POST-EQUALIZA-TION SIGNAL — 1003

PRE-EQUALIZA-TION SIGNAL — 1001

RECEPTION SIGNAL — 204

POSTE-RIOR INFORMA-TION — 1005

REFERENCE SIGNAL GENERA-TION UNIT — 1006

REFERENCE SIGNAL — 1007

# FIG.11

**EQUALIZATION PROCESSING UNIT** 1002

**LINEAR EQUALIZATION UNIT** 1101

POST-EQUALIZATION SIGNAL 1003

PRE-EQUALIZATION SIGNAL 1001

TAP COEFFICIENT 1103

**TAP COEFFICIENT ADJUSTMENT UNIT** 1102

REFERENCE SIGNAL 1007

TAP ADJUSTMENT SIGNAL 1107-2

**INPUT SIGNAL STORAGE MEMORY** 1106

STEP SIZE 1105

**STEP SIZE LEARNING UNIT** 1104

LEARNING SIGNAL 1107-3

EP 4 583 413 A1

# FIG.12

EP 4 583 413 A1

# FIG.13

NN LAYER — 704-k

707-k

702-k
LAYER
DATA SET

709-k
UPDATE
PARAMETER

1300-k
INTERNAL
PARAMETER
HOLDING UNIT

1310

1301-k
LINEAR
COMPU-
TATION
PROCESSING
UNIT

706-k-1

706-k

EP 4 583 413 A1

# FIG.14

EP 4 583 413 A1

# FIG.15

COMMUNICATION APPARATUS 1500-1

CONTROL UNIT 1501

TRANSMISSION AND RECEPTION PROCESSING UNIT 1502

1510

COMMUNICATION APPARATUS 1500-2

1504-1 LEARNING SIGNAL

1504-2 REFERENCE SIGNAL

1504-3 STEP SIZE

LEARNING APPARATUS 1503

STEP SIZE LEARNING UNIT 1505

EP 4 583 413 A1

# FIG.16

# FIG.17

EP 4 583 413 A1

# FIG.18

EQUALIZATION PROCESSING UNIT — 1703

LINEAR EQUALIZATION UNIT — 1801

1704 POST-EQUALIZATION SIGNAL

1805-1 EQUALIZATION UNIT INPUT SIGNAL

TAP COEFFICIENT — 1803

TAP COEFFICIENT ADJUSTMENT UNIT — 1802

1504-2 REFERENCE SIGNAL

1504-3 STEP SIZE

1805-2 TAP ADJUSTMENT SIGNAL

1804 INPUT DESTINA-TION CONTROL UNIT

1702 PRE-EQUALIZATION SIGNAL

1504-1 LEARNING SIGNAL

# FIG.19

1910

COMMUNICATION APPARATUS 1900-2

COMMUNICATION APPARATUS 1900-1
- CONTROL UNIT 1901
- TRANSMISSION AND RECEPTION PROCESSING UNIT 1902

1903 ACCESS POINT

1904
- 1905-1 LEARNING SIGNAL
- 1905-2 REFERENCE SIGNAL
- 1905-3 STEP SIZE

1906
1907

1905 LEARNING APPARATUS
- 1908 STEP SIZE LEARNING UNIT

# FIG.20

EQUALIZATION PROCESSING UNIT 1703

LINEAR EQUALIZATION UNIT 2001

POST-EQUALIZATION SIGNAL 1704

EQUALIZATION UNIT INPUT SIGNAL 2005-1

TAP COEFFICIENT 2003

TAP COEFFICIENT ADJUSTMENT UNIT 2002

REFERENCE SIGNAL 1905-2

STEP SIZE 1905-3

TAP ADJUSTMENT SIGNAL 2005-2

INPUT DESTINA-TION CONTROL UNIT 2004

PRE-EQUALIZATION SIGNAL 1702

LEARNING SIGNAL GENERATION UNIT 2006

LEARNING SIGNAL 1905-1

LEARNING SIGNAL 2005-3

EP 4 583 413 A1

# FIG.21

EP 4 583 413 A1

# FIG.22

COMMUNI-CATION APPARATUS  2200-1

COMMUNI-CATION APPARATUS  2200-m

COMMUNI-CATION APPARATUS  2200-M

2201-1

2201-m

2201-M

ACCESS POINT  2202

2210

2204

2205

LEARNING APPARATUS  2203

STEP SIZE LEARNING UNIT  2206

# FIG.23

```
          ┌─────────────┐
          │    START    │
          └──────┬──────┘
                 ▼
   ┌──────────────────────────┐
   │ PERFORM PRE-EQUALIZATION │ ⌐S1
   │       PROCESSING         │
   └────────────┬─────────────┘
                ▼
   ┌──────────────────────────┐
   │     LEARN STEP SIZE      │ ⌐S2
   └────────────┬─────────────┘
                ▼
   ┌──────────────────────────┐
   │  ADJUST TAP COEFFICIENT  │ ⌐S3
   └────────────┬─────────────┘
                ▼
   ┌──────────────────────────┐
   │     PERFORM LINEAR       │ ⌐S4
   │      EQUALIZATION        │
   └────────────┬─────────────┘
                ▼
   ┌──────────────────────────┐
   │ PERFORM POST-EQUALIZATION│ ⌐S5
   │       PROCESSING         │
   └────────────┬─────────────┘
                ▼
          ┌─────────────┐
          │     END     │
          └─────────────┘
```

# FIG.24

# FIG.25

## INTERNATIONAL SEARCH REPORT

| International application No. |
|---|
| **PCT/JP2022/040183** |

| A. | CLASSIFICATION OF SUBJECT MATTER |
|---|---|

*H04B 3/04*(2006.01)i
FI: H04B3/04 A

According to International Patent Classification (IPC) or to both national classification and IPC

| B. | FIELDS SEARCHED |
|---|---|

Minimum documentation searched (classification system followed by classification symbols)

H04B3/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | XIE, Xi Hai et al. Varible Step Size Multi-Layer Neural Network Blind Equalization Algorithm. 2022 4th International Conference on Natural Language Processing (ICNLP). 25 March 2022, pages 477-481<br>pages 477-481 | 1-12 |
| Y | HUA, Cai et al., MIMO-OFDM Channel Estimation Based on Neural Network, 2010 6th International Conference on Wireless Communications Networking and Mobile Computing (WiCOM), 23 September 2010, pages 1-4<br>pages 1-4 | 1-12 |
| Y | SARANGI, Archana et al., A MLP equalizer trained by variable step size firefly algorithm for channel equalization, 2016 IEEE 1st International Conference on Power Electronics, Intelligent Control and Energy Systems (ICPEICES), 04 July 2016, pages 1-5<br>pages 1-5 | 1-12 |

☑ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 December 2022** | **27 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
|---|
| **PCT/JP2022/040183** |

**C.    DOCUMENTS CONSIDERED TO BE RELEVANT**

| Category* | Citation of document, with indication, where appropriate, of the relevant passages | Relevant to claim No. |
|---|---|---|
| T | BOAS, Evandro C. Vilas et al. Artificial intelligence for channel estimation in multicarrier systems for B5G/6G communications: a survey. EURASIP Journal on Wireless Communications and Networking. 02 December 2022, vol. 2022, Article number: 116, pages 1-63, [retrieved on 13 December 2022], Internet: <URL: https://jwcneurasipjournals.springeropen.com/articles/10.1186/s13638-022-02195-3#Sec25> pages 1-63 | 1-12 |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S.U.H. QURESHI**. Adaptive Equalization. *Proceedings of the IEEE*, September 1985, vol. 73 (9), 1349-1387